# EUROPÄISCHE PATENTSCHRIFT

(11) **EP 2 160 417 B1**
(45) Veröffentlichungstag und Bekanntmachung des Hinweises auf die Patenterteilung: **19.01.2011**
(21) Anmeldenummer: 08758777.0
(22) Anmeldetag: 27.05.2008
(51) Int. Cl.: C08F 8/28, C08K 5/07, C09D 133/06, C09D 131/04, C09D 135/06, C08J 9/36

(54) **VERNETZBARE POLYMERDISPERSIONEN, BESCHICHTUNGSMITTEL ENTHALTEND DIESE UND DEREN VERWENDUNG**
CROSSLINKABLE POLYMER DISPERSIONS, COATING COMPOSITIONS COMPRISING THEM AND USE THEREOF
DISPERSIONS POLYMÈRES RÉTICULABLES, AGENTS DE REVÊTEMENT LES CONTENANT ET LEUR UTILISATION

(30) Priorität: 22.06.2007 DE 102007028917
(43) Veröffentlichungstag der Anmeldung: 10.03.2010
(73) Patentinhaber: Celanese Emulsions GmbH, 61476 Kronberg/Ts. (DE)
(72) Erfinder: JAKOB, Martin, 65779 Kelkheim (DE); DESOR, Ulrich, 65510 Idstein (DE); CABRERA, Ivan, 63303 Dreieich (DE)
(74) Vertreter: von Kreisler Selting Werner
(86) Internationale Anmeldenummer: PCT/EP2008/004191
(87) Internationale Veröffentlichungsnummer: WO 2009/000379

(56) Entgegenhaltungen:
- EP-A- 0 970 993
- DATABASE WPI Week 198146 Thomson Scientific, London, GB; AN 1981-84377D XP002492867 & JP 56 125446 A (NIPPON SYNTHETIC CHEM IND CO) 1. Oktober 1981 (1981-10-01)
- DATABASE WPI Week 198107 Thomson Scientific, London, GB; AN 1981-10577D XP002492868 & JP 55 157641 A (NIPPON SYNTHETIC CHEM IND CO) 8. Dezember 1980 (1980-12-08)

## Beschreibung

Die vorliegende Erfindung betrifft Polymerdispersionen mit ausgewählten Polyaldehyden als Vernetzungsmitteln. Daraus lassen sich vorzugsweise wässrige Beschichtungsmittel, insbesondere solche auf Polyacrylat-Basis formulieren, deren Verfilmungen eine erhöhte Blockfestigkeit sowie ausgezeichnete mechanische Eigenschaften aufweisen. Die Erfindung betrifft ferner Beschichtungsmittel enthaltend diese Polymerdispersionen sowie deren Verwendung zum Beschichten von Substraten.

Wäßrige Polymerdispersionen, insbesondere auf der Basis von Polyacrylaten, Polyvinylestem oder Polyvinylaromaten werden im Stand der Technik in vielen Gebieten eingesetzt. Solche Polymerdispersionen finden beispielsweise Anwendung als Bindemittel für Dispersionsfarben sowie als Weißleime zum Kleben von Holz und anderen porösen Substraten.

Eine wichtige anwendungstechnische Eigenschaft von Verfilmungen aus Polymerdispersionen ist deren Blockfestigkeit, also die Tendenz zur Ausbildung von klebfreien Filmen. Es ist bereits bekannt, dass die Blockfestigkeit von Verfilmungen aus Polymerdispersionen durch Vernetzung erhöht werden kann. Dazu sind unterschiedliche vernetzende Systeme gebräuchlich. Eines dieser Systeme verwendet Acetoacetylgruppen, welche in das Polymere einpolymerisiert werden und mit geeigneten vernetzend wirkenden polyfunktionellen Komponenten abreagieren.

Es ist auch bekannt, polyfunktionelle Aldehyde zur Verbesserung der Wasserresistenz von Polymerdispersionen zuzusetzen. In US-A 3,932,335 werden durch Zusatz von Glyoxal in Kombination mit wasserlöslichen Polyolen Polyvinylesterdispersionen erhalten, die wasserfeste Klebverbindungen ergeben.

EP-A-191,460 beschreibt mit Polyvinylalkohol stabilisierte Polyvinylacetatdispersionen, die mit Glutardialdehyd vernetzt werden und über einen Zeitraum von mindestens 30 Minuten kochwasserresistente Filme liefern.

WO-A-98/12,237 beschreibt selbstvernetzende wässrige Dispersionen. Diese enthalten neben ausgewählter Vinyl-Polymerkomponente, Vernetzer, Additiven und Lösungsmittel. Als Vernetzer werden aliphatische Dialdehyde, wie Glyoxal, sowie cyclische Dialdehyde, wie Furaldehyde, oder Dialkoxyfurane oder-pyrane offenbart. Die Dispersionen können als Rückseitenbeschichtungen oder als Bindemittel eingesetzt werden.

DE-A-198 30 555 und EP-A1-970 993 beschreiben die Verwendung wässeriger Polymerzubereitungen enthaltend ein filmbildendes Polymer in Form einer Dispersion für die Beschichtung polyurethanhaltiger Substrate. Eingesetzt werden Polymere enthaltend von ethylenisch ungesättigten Harnstoffen, Thioharnstoffen oder deren cyclischen Derivaten abgeleitete Gruppen copolymerisiert mit Acrylaten, Vinylestern oder Vinylaromaten in Kombination mit Di- oder Polyaldehyden. Neben aliphatischen Dialdehyden wird Terephthaldialdehyd vorgeschlagen. Diese Systeme vernetzen im alkalischen Milieu.

JP 56125446 offenbart ein in einem geeigneten Lösungsmittel gelöstes Harz, wobei es sich um ein Polyvinylalkohol-Harz handelt, welches Acetessigestergruppen aufweist, oder um ein entsprechend modifiziertes Polyvinylalkohol-/Polyvinylacetat-Harz.

JP 55157641 beschreibt eine Harzzusammensetzung, die durch Umsetzung von Dialdehyden mit Polyvinylalkohol-Harzen, die Acetessigestergruppen aufweisen, erhalten werden kann. Das so erhältliche Polymer liegt in Form einer wässrigen

Lösung oder eines wässrigen Gels vor und können als wasserabweisende Beschichtungsfilme verwendet werden.

Es besteht immer noch ein Bedarf nach Dispersionen, aus denen sich Verfilmungen mit hoher Blockfestigkeit und ausgezeichneten mechanischen Eigenschaften herstellen lassen.

Es wurde nun gefunden, daß diese Aufgabe durch ausgewählte Polymerdispersionen gelöst werden können.

Die Erfindung betrifft wässrige Polymerdispersion mit einem pH Wert von größer als 7 enthaltend a) mindestens ein filmbildendes Polymer abgeleitet von mindestens zwei unterschiedlichen radikalisch polymerisierbaren ethylenisch ungesättigten Monomeren, von denen das erste Monomer ausgewählt wird aus der Gruppe der Mono- oder Diester von α, β-ethylenisch ungesättigten Mono- oder Dicarbonsäuren mit Alkanolen, der Vinylester oder der Vinylaromaten und das zweite Monomer eine α, βethylenisch ungesättigte Verbindung ist, die eine im alkalischen Milieu mit Aldehyden reaktive Gruppe aufweist, und enthaltend b) mindestens ein Stabilisierungsmittel, sowie c) mindestens einen cycloaliphatischen Kohlenwasserstoff mit zwei bis sechs Aldehydgruppen.

Bevorzugte Ausführungsformen der erfindungsgemäßen Polymerdispersion sind in den Ansprüchen 2 bis 14 definiert.

Weitere Gegenstände der vorliegenden Erfindung sind eine härtbare Zusammensetzung gemäß Anspruch 15 und ein Beschichtungsmittel gemäß Anspruch 16.

Die erfindungsgemäßen Polymerdispersionen können als Einkomponenten- oder als Mehrkomponenten-Formulierungen eingesetzt werden. Überraschenderweise weisen Einkomponenten-Formulierungen eine ausreichende Lagerstabilität auf und vernetzen in der Regel erst nach Ausbildung des Polymerfilms. Liegt die erfindungsgemäße Polymerdispersion als Mehrkomponenten-Formulierung aus mindestens zwei Komponenten A) und B) vor, so werden in Komponente A) das Copolymere a) und das Stabilisierungsmittel b) eingesetzt und in Komponente B) der cycloaliphatische Aldehyd c).

Gegenstand der Erfindung ist auch die Komponenten a), b) und c) enthaltende vernetzbare Zusammensetzung sowie das daraus erhältliche vernetzte Produkt.

Die Emulsionspolymerisate, welche als Polymerbasis in den erfindungsgemäßen Zusammensetzungen eingesetzt werden, sind im Wesentlichen auf Basis von ein oder mehreren ethylenisch ungesättigten Verbindungen aufgebaut; dabei handelt es sich vorzugsweise um von Estern α, β-ethylenisch ungesättigter C₃-C₈-Mono- oder Dicarbonsäuren und/oder von Vinylestern und/oder von Alkenylaromaten abgeleitete Polymere.

Als Basis für die genannten Polymerklassen kommen prinzipiell folgende Gruppen an Monomeren in Betracht:
Eine Gruppe bilden Vinylester von ein bis achtzehn Kohlenstoffatome aufweisenden Monocarbonsäuren, beispielsweise Vinylformiat, Vinylacetat, Vinylpropionat, Vinylisobutyrat, Vinylvalerat, Vinylpivalat, Vinyl-2-ethylhexanoat, Vinyldecanoat, Isopropenylacetat, Vinylester von gesättigten verzweigten Monocarbonsauren mit 5 bis 15 Kohlenstoffatomen im Säurerest, insbesondere Vinylester der Versatic^{™}-Säuren, Vinylester von langerkettigen gesättigten oder ungesättigten Fettsäuren wie beispielsweise Vinyllaurat, Vinylstearat sowie Vinylester der Benzoesäure und substituierter Derivate der Benzoesäure wie Vinyl-p-tert.-butylbenzoat. Unter diesen ist jedoch Vinylacetat als Hauptmonomer besonders bevorzugt.

Eine weitere Gruppe von Monomeren, die neben den Vinylestern und/oder Estern α, β-ethylenisch ungesättigter C₃-C₈-Mono- oder Dicarbonsäuren und/oderAlkenylaromaten eingesetzt werden können, bilden aliphatische, monoolefinisch oder diolefinisch ungesättigte, gegebenenfalls Halogen-substituierte Kohlenwasserstoffe, wie Ethen, Propen, 1-Buten, 2-Buten, Isobuten, konjugierte C₄-C₈-Diene, wie 1,3-Butadien, Isopren, Chloropren, Vinylchlorid, Vinylidenchlorid, Vinylfluorid oder Vinylidenfluorid.

Eine weitere Gruppe von Monomeren bilden Ester α, β-ethylenisch ungesättigter C₃-C₈-Mono- oder Dicarbonsäuren mit vorzugsweise C₁-C₁₈-Alkanolen und insbesondere C₁-C₈-Alkanolen oder C₅-C₈-Cycloalkanolen in Frage. Bei den Estern der Dicarbonsäuren kann es sich um Halbester oder vorzugsweise um Diester handeln. Geeignete C₁-C₈-Alkanole sind beispielsweise Methanol, Ethanol, n-Propanol, i-Propanol, 1-Butanol, 2-Butanol, Isobutanol, tert.-Butanol, n-Hexanol und 2-Ethylhexanol. Geeignete Cycloalkanole sind beispielsweise Cyclopentanol oder Cyclohexanol. Beispiele sind Ester der Acrylsäure, der Methacrylsäure, der Crotonsäure, der Maleinsäure, der Itaconsäure, Citraconsäure oder der Fumarsäure wie (Meth)acrylsäuremethylester, (Meth)acrylsäureethylester, (Meth)acrylsäure-isopropylester, (Meth)acrylsäure-n-butylester, (Meth)acrylsäureisobutyl-ester, (Meth)acrylsäure-1-hexylester, (Meth)acrylsäure-tert-butylester, (Meth)acrylsäure-2-ethylhexylester, Di-n-methylmaleinat oder -fumarat, Di-n-ethylmaleinat oder -fumarat, Di-n-propylmaleinat oder -fumarat, Di-n-butylmaleinat oder -fumarat, Diisobutylmaleinat oder -fumarat, Di-n-pentylmaleinat oder -fumarat, Di-n-hexylmaleinat oder fumarat, Dicyclohexyl-maleinat oder -fumarat, Di-n-heptylmaleinat oder -fumarat, Difumarat, Dicyclohexyl-maleinat oder -fumarat, Di-n-heptylmaleinat oder -fumarat, Din-octylmaleinat oder -fumarat, Di-(2-ethylhexyl)maleinat oder -fumarat, Di-n-nonylmaleinat oder -fumarat, Di-n-decylmaleinat oder -fumarat, Di-n-undecylmaleinat oder -fumarat, Dilaurylmaleinat oder -fumarat , Dimyristiylmaleinat oder -fumarat, Dipalmitoylmaleinat oder -fumarat, Di-stearylmaleinat oder-fumarat und Diphenylmaleinat oder -fumarat. Diese Gruppe von Hauptmonomeren ist besonders bevorzugt, da die daraus hergestellten Copolymere im alkalischen Bereich in der Regel eine hohe Beständigkeit aufweisen.

Eine weitere Gruppe von Monomeren bilden die Alkenylaromaten. Dabei handelt es sich um Monoalkenylaromaten. Beispiele dafür sind Styrol, Vinyltoluol, Vinylxylol, α-Methylstyrol oder o-Chlorstyrol. Auch diese Gruppe von Hauptmonomeren ist besonders bevorzugt, da die daraus hergestellten Copolymere im alkalischen Bereich in der Regel eine hohe Beständigkeit aufweisen.

Die genannten Monomere bilden in der Regel die Hauptmonomeren, die in Bezug auf die Gesamtmenge der nach dem Verfahren der radikalischen wässrigen Polymerisation zu polymerisierenden Monomeren normalerweise einen Anteil von mehr als 50 Gew. %, bevorzugt mehr als 75 % auf sich vereinen.

Die Monomeren sind so auszuwählen, dass ein Copolymerisat entsteht, das im alkalischen Milieu der Kunststoff-Dispersion stabil ist. Copolymerisate auf der Basis von Vinylestern zeigen in einigen Fällen keine ausreichende-Stabilität. Der Fachmann kann jedoch geeignete Systeme mittels Routineexperimenten ermitteln.

Bevorzugte Hauptmonomere sind auf Basis folgender Polymerklassen aufgebaut:
Homo-oder Copolymere ein oder mehrerer Vinylester, insbesondere von Vinylacetat; Copolymere von Vinylestern mit Estern α, β-ethylenisch ungesättigter C₄-C8-Mono- oder Dicarbonsäuren mit C₁-C₈-Alkanolen, insbesondere Ester der (Meth)acrylsäure und Malein-/oder Fumarsäure; Copolymere der Vinylester, insbesondere Vinylacetat, mit Ethylen; Terpolymere aus Vinylestern, Ethylen und Estern α, β-ethylenisch ungesättigten C₃-C₈-Mono- oder Dicarbonsäuren mit C₁-C₈-Alkanolen, insbesondere Estern der (Meth)acrylsäure und Malein-/oder Fumarsäure; Homo- oder Copolymere von Estern der (Meth)acrylsäure; Copolymere des Styrols mit Butadien und/oder Estern der α, βethylenisch ungesättigten C₃-C₈-Mono- oder Dicarbonsäuren mit C₁-C₈-Alkanolen, insbesondere Estern der (Meth)acrylsäure.

Neben den Hauptmonomeren leiten sich die erfindungsgemäß eingesetzten Copolymeren von mindenstens einem zweiten Monomer ab, das dem Copolymeren die gewünschte Vernetzbarkeit mit Aldehyden verleiht. Dabei handelt es sich um eine α, β-ethylenisch ungesättigte Verbindung, die eine im alkalischen Milieu mit Aldehyden reaktive Gruppe aufweist.

Bevorzugt handelt es sich dabei um Monomere, die ausgewählt werden aus der Gruppe der ethlyenisch ungesättigten Monomeren enthaltend eine 1,3-Diketogruppe, vorzugsweise eine Acetoacetylgruppe, oder der ethylenisch ungesättigten Monomeren enthaltend eine N-funktionelle Gruppe, vorzugsweise der ethylenisch ungesättigten Monomeren enthaltend einen Imidazolinonrest oder der ethylenisch ungesättigten Monomeren enthaltend einen Harnstoffrest.

Beispiele dafür sind Verbindungen der Formeln(Ia), (Ib), (Ic) und (Id) 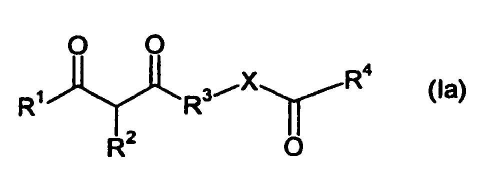 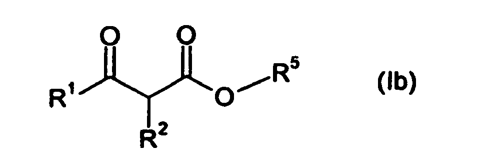 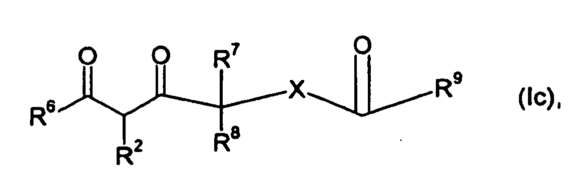 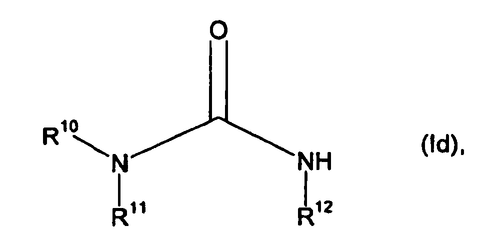
worin R¹ ein C₁-C₅-Alkylrest, vorzugsweise Methyl ist,
R² ein C₁-C₅-Alkylrest oder vorzugsweise Wasserstoff ist,
R³ ein C₁-C₅-Alkylenrest bedeutet, und
R⁴ der Rest einer ethylenisch ungesättigten organischen Carbonsäure nach dem Entfernen der Carboxylgruppe ist, vorzugsweise ein Rest der Acrylsäure oder der Methacrylsäure nach Entfernen der Carboxylgruppe,
X Sauerstoff oder NR¹³ bedeutet, mit R¹³ Wasserstoff oder C₁-C₅-Alkyl,
R⁵ Vinyl oder Allyl bedeutet,
R⁶ ein C₁-C₅-Alkylrest, vorzugsweise Methyl ist,
R⁷ und R⁸ unabhängig voneinander Wasserstoff oder einen C₁-C₅-Alkylrest, vorzugsweise jeweils Methyl, bedeuten,
R⁹ ein Rest einer ethylenisch ungesättigten organische Carbonsäure nach dem Entfernen der Carboxylgruppe ist, vorzugsweise ein Rest der Acrylsäure oder der Methacrylsäure nach Entfernen der Carboxylgruppe,
R¹⁰ für einen monoethylenisch ungesättigten Rest mit 2-20 C-Atomen steht, und
R¹¹ und R¹² unabhängig voneinander Wasserstoff, C₁-C₅-Alkyl bedeuten oder gemeinsam eine C₂-C₄-Alkylengruppe bilden, die gegebenenfalls ein- oder zweifach mit C₁-C₅-Alkyl, C₁-C₄-Alkoxy und/oder Hydroxy substituiert ist.

Besonders bevorzugt eingesetzte zweite Monomere sind ethylenisch ungesättigte Verbindungen, die im Basischen über CH (acide) Carbonylgruppen mit dem Polyaldehyd vernetzbar oder selbstvernetzend sind. Beispiele sind Allylacetoacetat, Vinylacetoacetat sowie Acetoacetoxyethylacrylat oder -methacrylat

Weitere besonders bevorzugt eingesetzte zweite Monomere sind ethylenisch ungesättigte Verbindungen, die im Basischen über Imidazolinonreste oder über Harnstoffreste vernetzbar oder selbstvernetzend sind. Beispiele sind N-Vinylethylenharnstoff, N-[((Meth)acryloyloxyacetoxyethyl)ethylenharnstoff, N-(2-(Meth)acryloyl-oxyethyl)-ethylenharnstoff, N-[(3-Allyloxy-2-hydroxypropyl)aminoethyl]ethylenharnstoff, N-(Acrylamidoethyl)ethylenharnstoff, N-(Methacrylamidoethyl)ethylenharnstoff, N-Allylethylenhamstoff, N-(2-Methacryloxyacetoamidoethyl)ethylenharnstoff, N-(2-Methacryloyloxyethyl)ethylenharnstoff, N-(Methacrylamidoethyl)-ethylenharnstoff.

Weitere als zweite Monomere besonders bevorzugt eingesetzte ethylenisch ungesättigte Monomere mit N-funktionellen Gruppen sind (Meth)-acrylamid, Allylcarbamat, Acrylnitril, Methacrylnitril, N-Methylol(meth)acrylamid, N-Methylolallylcarbamat sowie die N-Methylolester, -alkylether oder Mannichbasen des N-Methylol(meth)acrylamids oder N-Methylolallyl-carbamats, Acrylamidoglykolsäure, Acrylamidomethoxyessigsäure-methylester, N-(2,2-Dimethoxy-1-hydroxyethyl)-acrylamid, N-Dimethylamino-propyl(meth)-acrylamid, N-Methyl(meth)acrylamid, N-Butyl(meth)acrylamid, N-Cyclohexyl(meth)-acrylamid, N-Dodecyl(meth)acrylamid, N-Benzyl(meth)acrylamid, p-Hydroxyphenyl-(meth)acrylamid, N-(3-Hydroxy-2,2-dimethylpropyl)methacrylamid, N-vinylformamid oder N-Vinylpyrrolidon.

Das zweite Monomer wird in einer Menge, bezogen auf die Gesamtmenge der zu polymerisierenden Monomeren, von weniger als 50 Gew. %, vorzugsweise zu weniger als 30 Gew. % eingesetzt.

Selbstverständlich können weitere Comonomere, welche die Eigenschaften in gezielter Weise modifizieren, bei der Polymerisation mitverwendet werden. Solche Hitfsmonomere werden im Normalfall lediglich als modifizierende Monomere in Mengen, bezogen auf die Gesamtmenge der zu polymerisierenden Monomeren, von weniger als 50 Gew. %, in der Regel von weniger als 20, vorzugsweise zu weniger als 10 Gew. % einpolymerisiert.

Diese Monomeren dienen zur weiteren Stabilisierung der Dispersionen, können durch Vernetzung während der Polymerisation oder während der Verfilmung die Filmkohäsion oder andere Eigenschaften verbessern und/oder durch eine geeignete Funktionalität mit dem Polyaldehyd c) unter Vernetzung reagieren.

Monomere, die zur weiteren Stabilisierung dienen können, sind in der Regel Monomere, die eine Säurefunktion aufweisen und/oder deren Salze. Zu dieser Gruppe zählen beispielsweise α,β-monoethylenisch ungesättigte Mono- und Dicarbonsäuren mit 3 bis 10 C-Atomen, ethylenisch ungesättigte Sulfonsäuren, ethylenisch ungesättigte Phosphonsäuren oder Dihydrogenphosphate und deren wasserlösliche Salze, z. B. deren Natriumsalze. Bevorzugte Monomere aus dieser Gruppe sind Vinylsulfonsäure und ihre Alkalisalze, Acrylamidopropansulfonsäure und ihre Alkalisalze, ethylenisch ungesättigte C₃-C₈-Carbonsäuren und C₄-C₈-Dicarbonsäuren, z. B. Itaconsäure, Crotonsäure, Vinylessigsäure, Acrylamidoglykolsäure und insbesondere Acrylsäure und Methacrylsäure.

Beispiele für vernetzende Hilfsmonomere sind zwei oder mehr Vinylreste aufweisende Monomere, zwei oder mehr Vinylidenreste aufweisende Monomere sowie zwei oder mehr Alkenylreste aufweisende Monomere. Besonders vorteilhaft sind dabei die Di-Ester zweiwertiger Alkohole mit α,β-monoethylenisch ungesättigten Monocarbonsäuren, unter denen die Acryl und Methacrylsäure bevorzugt sind, die Di-Ester zweiwertiger Carbonsäuren mit ethylenisch ungesättigten Alkoholen, sonstige Kohlenwasserstoffe mit zwei ethylenisch ungesättigten Gruppen oder die Di-Amide zweiwertiger Amine mit α,β-monoethylenisch ungesättigten Monocarbonsäuren.

Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykotdiacrylate oder -methacrylate und Ethylenglykoldiacrylate oder -methacrylate, 1,2-Propylenglykoldimethacrylat, 1,3-Propylenglykol-dimethacrylat, 1,3-Butylenglykoldimethacrylat, 1,4-Butylenglykoldimethacrylate, Hexandioldiacrylat, Pentaerythroldiacrylat sowie Divinylbenzol, Vinylmethacrylat, Vinylacrylat, Vinylcrotonat, Allylmethacrylat, Allylacrylat, Diallylmaleat, Diallylfumarat, Diallylphthalat, Cyclopentadienylacrylat, Divinyladipat oder Methylenbisacrylamid.

Es können aber auch Monomere mit mehr als zwei Doppelbindungen eingesetzt werden, beispielsweise Tetraallyloxyethan, Trimethylolpropantriacrylat oder Triallylcyanurat.

Eine weitere Gruppe von Hilfsmonomeren bilden hydroxyfunktionelle Monomere wie die Methacrylsäure- und Acrylsäure-C₁-C₉-Hydroxyalkylester, wie n-Hydroxyethyl-, n-Hydroxypropyl- oder n-Hydroxybutylacrylat und -methacrylat sowie deren Addukte mit Ethylenoxid oder Propylenoxid.

Eine weitere Gruppe von Hilfsmonomeren besteht aus Silangruppen enthaltenden Monomeren z. B. Vinyltrialkoxysilane, wie Vinyltrimethoxysilan, Vinyltriethoxysilan, Alkylvinyldialkoxysilane oder (Meth)acryloxyalkyltrialkoxysilane, z. B. (Meth)acryloxy-ethyltrimethoxysilan, oder Meth)acryloxypropyltrimethoxysilan.

Eine weitere Gruppe von Hilfsmonomeren besteht aus epoxygruppenhaltigen Monomeren wie beispielsweise Allylglycidylether, Methacrylglycidylether, Butadienmonoepoxide, 1,2-Epoxy-5-hexen, 1,2-Epoxy-7-octen, 1,2-Epoxy-9-decen, 8-Hydroxy-6,7-epoxy-1-octen, 8-Acetoxy-6,7-epoxy-1-octen, N-(2,3-Epoxy)-propylacrylamid, N-(2,3-Epoxy)-propylmethacrylamid, 4-Acrylamidophenylglycidylether, 3-Acrylamidophenylglycidylether, 4-Methacrylamidophenylglycidylether, 3-Methacrylamidophenylglycidylether, N-Glycidoxymethylacrylamid, N-Glycidoxypropylmethacrylamid, N-Glycidoxyethylacrylamid, N-Glycidoxyethyl-methacrylamid, N-Glycidoxy-propylacrylamid, N-Glycidoxypropylmethacrylamid, N-Glycidoxybutylacrylamid, N-Glycidoxybutylmeth-acrylamid, 4-Acrylamidomethyl-2,5-dimethylphenylglycidylether, 4-Methacrylamido-methyl-2,5-dimethyl-phenylglycidylether, Acrylamidopropyldimethyl-(2,3-epoxy}-propylammoniumchlorid, Methacrylamidopropyldimethyl-(2,3-epoxy)-propyl-ammoniumchlorid und Glycidylmethacrylat.

Neben dem Copolymer enthalten die erfindungsgemäßen Dispersionen Stabilisierungsmittel. Dabei handelt es sich um ionische Emulgatoren und/oder um nichtionische Emulgatoren und/oder um Schutzkolloide.

Als Emulgatoren können die an sich bekannten und üblichen ionischen, vorzugsweise anionischen, oder nichtionischen Emulgatoren eingesetzt werden. Eine Auflistung geeigneter Emulgatoren findet sich in Houben-Weyl, Methoden der organischen Chemie, Band XIV/I, Makromolekulare Stoffe, Georg- Thieme-Verlag, Stuttgart, 1961, S. 192-208).

Beispiele für nichtionische Emulgatoren sind Acyl-, Alkyl-, Oleyl- und Alkylaryloxethylate. Diese Produkte sind beispielsweise im Handel unter der Bezeichnung Genapol^{®} oder Lutensol^{®} erhältlich. Hierunter fallen beispielsweise ethoxilierte Mono-, Di- und Tri-Alkylphenole (EO-Grad: 3 bis 50, Alkylsubstituentenrest: C₄ bis C₁₂) sowie ethoxilierte Fettalkohole (EO-Grad: 3 bis 80; Alkylrest: C₈ bis C₃₆), speziell C₁₂-C₁₄-Fettalkohol(3-8)ethoxilate, C₁₃-C₁₅-Oxoalkohol(3-30)ethoxilate, C₁₆-C₁₈-Fettalkohol(1 1-80)ethoxilate, C₁₀-Oxoalkohol(3-11)ethoxilate, C₁₃-Oxo-alkohol(3-20)ethoxilate, Polyoxyethylensorbitanmonooleat mit 20 Ethylenoxid-gruppen, Copolymere aus Ethylenoxid und Propylenoxid mit einem Mindestgehalt von 10 Gew.-% Ethylenoxid, die Polyethylenoxid(4-20)-Ether von Oleylalkohol sowie die Polyethylenoxid(4-20)-Ether von Nonylphenol. Besonders geeignet sind die Polyethylenoxid(4-20)-Ether von Fettalkoholen, insbesondere von Oleylalkohol.

Beispiele für anionische Emulgatoren sind Salze von Bisestem von sulfonierten Dicarbonsäuren mit 4 bis 8 Kohlenstoffatomen, wie sulfonierte Salze von Estern der Bernsteinsäure, z.B. Alkalisalze der Sulfobernsteinsäureester mit aliphatischen gesättigten einwertigen Alkoholen der Kettenlänge C₄-C₁₆, Sulfobernsteinsäure-4-Ester mit Polyethylen-glykolethern von einwertigen aliphatischen Alkoholen der Kettenlänge C₁₀-C₁₂ (Di-Natriumsalz), Sulfobernstein-säure-4-Ester mit Polyethylenglykolnonyl-phenylether (Di-Natriumsalz) oder Sulfobemsteinsäure-biscyclohexylester (Natriumsalz).

Weitere Beispiele für anionische Emulgatoren sind Natrium-, Kalium- und Ammoniumsalze von geradkettigen aliphatischen Carbonsäuren der Kettenlänge C₁₂-C_{20,} Natriumhydroxyoctadecansulfonat, Natrium-, Kalium- und Ammoniumsalze von Hydroxyfettsäuren der Kettenlänge C₁₂-C₂₀ und deren Sulfierungs-und/oder Acetylierungsprodukte, Alkylsulfate, auch als Triethanolaminsalze, Alkyl-(C₁₀-C₂₀)-sulfonate, Alkyl(C₁₀-C₂₀)-arylsulfonate Dimethyldialkyl(C₈-C₁₈)-ammoniumchlorid, und ihre Sulfierungsprodukte, Ligninsulfonsäure sowie deren Calcium-, Magnesium-, Natrium- und Ammoniumsalze, Harzsäuren, hydrierte und dehydrierte Harzsäuren sowie deren Alkalisalze, dodecyliertes Diphenylether disulfonsaures Natrium sowie Natriumlaurylsulfat, oder ethoxyliertes Natriumlaurylethersulfat (EO-Grad 3).

Als Schutzkolloide können die an sich bekannten und üblichen polymeren Verbindungen eingesetzt werden. Diese sind in der Regel bereits während der Emulsionspolymerisation zugegen.

Geeignete Schutzkolloide sind beispielsweise Polyvinylalkohole, Polyalkylenglykole, Alkalimetallsalze von Polyacrylsäuren und Polymethacrylsäuren, Cellulose-, Stärke-und Gelatinederivate oder von Acrylsäure, Methacrylsäure, Maleinsäure, Maleinsäureanhydrid, Methylvinylether, Styrol, 2-Acryl-amido-2-methylpropan-sulfonsäure und/oder 4-Styrolsulfonsäure abgeleitete Polymerisate und deren Alkalimetallsalze aber auch Polymere abgeleitet von N-Vinylpyrrolidon, N-Vinylcaprolactam, N-Vinylcarbazol, 1-Vinylimidazol, 2-Vinylimidazol, 2-Vinylpyridin, 4-Vinylpyridin, Acrylamid, Methacrylamid, amingruppentragenden Acrylaten, Methacrylaten, Acrylamiden und/oder Methacrylamiden. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, Seiten 411 bis 420.

Handelt es sich beim den Schutzkolloiden um Polyvinylalkohol, wird insbesondere Polyvinylalkohol vom Hydrolysegrad 60-100 Mol.-%, vorzugsweise 70 bis 98 Mol.-%, und Viskositäten der 4 Gew.-%igen wäßrigen Lösungen bei 20°C von 2 bis 70 mPa*s oder Gemische dieser Typen verwendet. Neben "homopolymerem" Polyvinylalkohol, d.h. nur aus Vinylalkohol- und restlichen Vinylacetatgruppen bestehendem Polyvinylalkohol, können Copolymere bzw. funktionalisierte Polyvinylalkohole eingesetzt werden, beispielsweise Umsetzungsprodukte des Polyvinylalkohols mit Diketen oder mit Carboxylgruppen, Thiolgruppen, Formamidogruppen, Aminogruppen, Arylaminogruppen, Sulfatgruppen, Sulfonatgruppen, Phosphonatgruppen, quaternäre Ammoniumgruppen und andere funktionelle Gruppen tragende Typen von Polyvinylalkoholen.

Die genannten Stabilisierungsmittel, also die Emulgatoren und/oder Schutzkolloide können der Dispersion gegebenenfalls auch während oder nach der Polymerisation zugesetzt werden.

Bezogen auf den Feststoffanteil der Polymerdispersion kann der Anteil der polymeren Schutzkolloide bis zu 35 Gew.-%, insbesondere 1 bis 20 Gew.-% betragen.

Der Anteil der Emulgatoren kann bis zu 10 Gew.-%, bezogen auf den Feststoffanteil der Polymerdispersion betragen. Emulgatoren können bereits während der Polymerisation zugegen sein und/oder danach zugegeben werden.

Bevorzugt werden Dispersionen ohne Schutzkolloide aber mit bis zu 3 Gew. %, bezogen auf den Feststoffanteil der Polymerdispersion, an anionischen und/oder nichtionischen Emulgatoren.

Das Copolymer weist mit Aldehyden vernetzbare Gruppen auf, die sich von dem oben definierten zweiten Monomer ableiten. Dabei handelt es sich beispielsweise um aktivierte Methylengruppen, Amino-, Amido-, Ureido- und hier bevorzugt Imidazolinongruppen

Als Polyaldehyde werden erfindungsgemäß cycloaliphatische Kohlenwasserstoffe mit zwei bis sechs Aldehydgruppen eingesetzt.

Die in den erfindungsgemäßen Polymerdispersionen eingesetzten cycloaliphatischen Polyaldehyde leiten sich von mono- oder polycyclischen, bevorzugt von bicyclischen Kohlenwasserstoffen ab. Beispiele für monocyclische Kohlenwasserstoffe sind Cyclopentan, Cyclohexan, Cycloheptan und Cyclooctan. Beispiele für bicyclische Kohlenwasserstoffe sind Norbonan, Norbornen oder Tricyclodecan ("TCD"). Diese Polyaldehyde weisen insbesondere zwei bis vier Aldehydgruppen auf. Diese können direkt mit dem cycloaliphatischen Kern kovalent verbunden sein oder über eine Brückengruppe, beispielsweise eine Alkylengruppe. Beispiele für bevorzugte Verbindungen dieses Typs sind Cyclohexandialdehyd, Cyclopentandialdehyd, Vinylcyclohexandialdehyd, Norbomandialdehyd, Norbornendialdehyd, Ethylnorbomandialdehyd oder besonders bevorzugt 3(4),8(9)-Bis(formyl)-tricyclo[5.2.1.0^{2.6}]decan oder "Tricyclodecandialdehyd" (="TCD-Dialdehyd").

Diese bevorzugten Dialdehyde weisen die nachstehenden Strukturen der Formeln (II) bis (X) auf 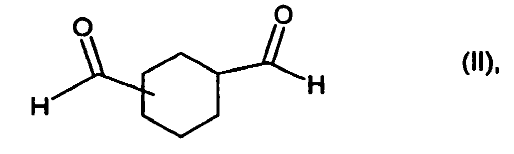 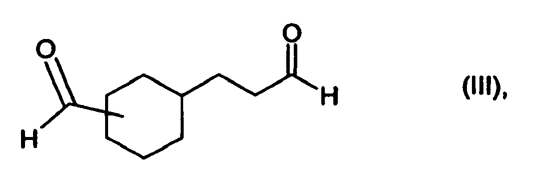 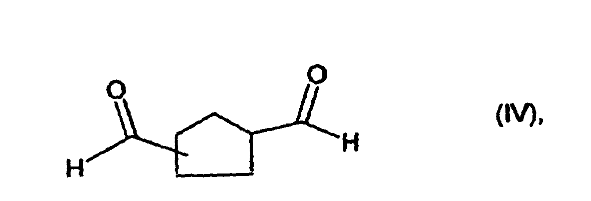 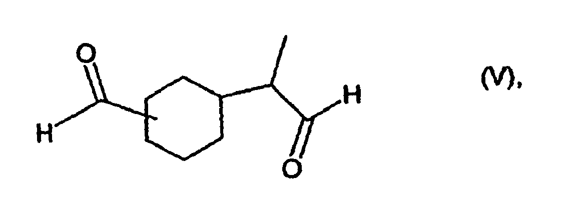 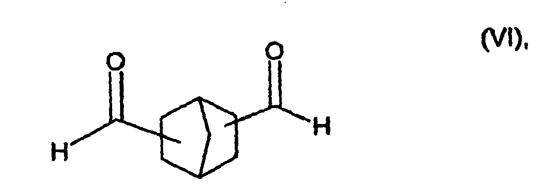 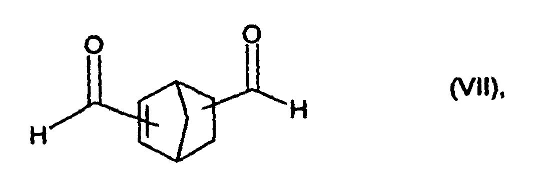 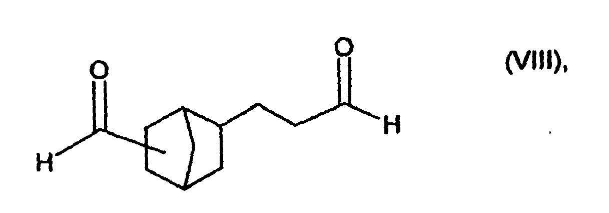 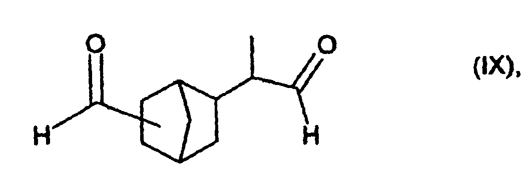 und

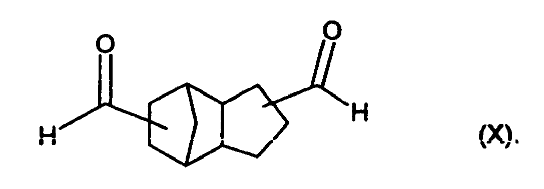

Die erfindungsgemäß eingesetzten Polyaldehyde sind an sich bekannte Verbindungen, die teilweise kommerziell erhältlich sind oder die nach bekannten Verfahren der organischen Chemie hergestellt werden können.

Die oben als besonders bevorzugt aufgezählten Dialdehyde von mono- oder bicyclischen Kohlenwasserstoffen können beispielsweise durch Hydroformylierung der entsprechenden Alkenylverbindungen hergestellt werden.

So lässt sich der besonders bevorzugt eingesetzte TCD-Dialdehyd beispielsweise nach dem aus der US-A-2005/0101805 bekannten Verfahren herstellen.

Die verwendete Menge der Polyaldehyde beträgt 0,001 Gew.-% bis 25 Gew.%, bezogen auf die Festsubstanz der Kunststoff-Dispersion und hängt von der Art des eingesetzten Polyaldehyds sowie von der Zusammensetzung der Dispersion ab.

Der bevorzugte Bereich liegt zwischen 0,01 und 30 Gew.%, insbesondere zwischen 0,1 und 25 Gew. %, bezogen auf die Festsubstanz der Kunststoff-Dispersion.

Die erfindungsgemäße Polymerdispersion kann weitere übliche Additive enthalten, die typischerweise bei Farbrezepturen oder anderen Baustoff-Formulierungen eingesetzt werden. Dazu zählen beispielsweise Filmbildehilfsmittel zur Erniedrigung der Mindestfilmbildetemperatur ("MFT-Erniedriger"), Weichmacher, Puffer, pH-Stellmittel, Dispergiermittel, Entschäumer, Füllstoffe, Farbstoffe, Pigmente, Silan-Kupplungsmittel, Verdickungsmittel, Viskositätsregler, Lösungsmittel und/oder Konservierungsmittel und externe Vernetzungsmiftel, wie beispielsweise Vernetzerharze.

Die erfindungsgemäße Polymerdispersion besitzt einen alkalischen pH-Wert, der in einem Bereich liegt, in dem die Aldehydgruppen des cycloaliphatischen Polyaldehyds mit den reaktiven Gruppen des zweiten Monomers zu Vernetzungsreaktionen befähigt sind. Dieser pH-Bereich liegt vorzugsweise zwischen 7,1 und 14, insbesondere zwischen 8,5 und 11,5. Ein geeigneter pH-Wert kann schon nach der Emulsions-polymerisation zur Herstellung der Polymerdispersion erreicht sein oder er kann durch Zugabe von basischen Verbindungen nachträglich eingestellt werden. Um den pH-Wert im angestrebten basischen Bereich einzustellen, sind organische oder anorganische Lewis- und Brensted-Basen geeignet. Beispiele für geeignete Basen sind Natron- oder Kalilauge, Wasserglas, Ammoniak, primäre, sekundäre oder tertiäre Amine, Aminoalkohole, wie z.B.AMP 90, oder Alkalimetallcarbonate oder-bicarbonate, wie Na₂CO₃ oder NaHCO₃.

Bevorzugt werden Mehrkomponentenzusammensetzungen, bei denen wenigstens die Komponente A, vorzugsweise das Gemisch aus Komponente A und B, einen pH Wert von 7,1 bis 14, insbesondere zwischen 8,5 und 11,5 aufweist.

Eine spezielle Ausführungsform der erfindungsgemäßen Mehrkomponenten-Formulierungen besteht darin, dass Komponente A) und B) vorformuliert werden und die zuvor erwähnten pH-Stellmittel den kombinierten Komponenten A) und B) nachträglich zugesetzt werden.

Der Feststoffgehalt der erfindungsgemäßen Polymerdispersion beträgt vorzugsweise 20 bis 70 Gew.-%, insbesondere 30 bis 65 Gew.-%.

Die Herstellung der Polymerdispersion wird unter den üblichen kontinuierlichen oder diskontinuierlichen Verfahrensweisen der radikalischen Emulsionspolymerisation vorgenommen. Die Emulsionspolymerisation kann einstufig oder bevorzugt mehrstufig erfolgen. Die bevorzugt eingesetzten Mehrstufenpolymerisate zeichnen sich durch eine besonders günstige Blockfestigkeit sowie ausgezeichnete mechanische Eigenschaften der Verfilmungen aus.

Die Durchführung einer radikalisch initiierten wäßrigen Emulsionspolymerisation von ethylenisch ungesättigten Monomeren ist vielfach vorbeschrieben und dem Fachmann daher hinreichend bekannt [vgl. z.B. Encyclopedia of Polymer Science and Engineering, Vol. 8, Seiten 659 bis 677, John Wiley & Sons, Inc., 1987; D.C. Blackley, Emulsion Polymerisation, Seiten 155 bis 465, Applied Science Publishers, Ltd., Essex, 1975; D.C. Blackley, Polymer Latices, 2nd Edition, Vol. I, Seiten 33 bis 415, Chapman & Hall, 1997; H. Warson, The Applications of Synthetic Resin Emulsions, Seiten 49 bis 244, Ernest Bonn. Ltd.. London, 1972; D. Diederich, Chemie in unserer Zeit 1990, 24, Seiten 135 bis 142, Verlag Chemie, Weinheim; J. Piirma, Emulsion Polymerisation, Seiten I bis 287, Academic Press, 1982; F. Hölscher, Dispersionen synthetischer Hochpolymerer, Seiten I bis 160. Springer-Verlag, Berlin, 1969 und die Patentschrift DE-A 40 03 422]. Sie erfolgt üblicherweise so, daß man die ethylenisch ungesättigten Monomeren, häufig unter Mitverwendung von Dispergierhilfsmitteln, in wäßrigem Medium dispers verteilt und mittels wenigstens eines radikalischen Polymerisationsinitiators polymerisiert.

Hierbei kommen wasserlösliche und/oder öllösliche Initiatorsysteme wie Peroxodisulfate, Azoverbindungen, Wasserstoffperoxid, organische Hydroperoxide oder Dibenzoylperoxid zum Einsatz. Diese können entweder für sich oder in Kombination mit reduzierenden Verbindungen wie Fe(II)-Salzen, Natriumpyrosulfit, Natriumhydrogensulfit, Natriumsulfit, Natriumdithionit, Natriumformaldehydsulfoxylat, Ascorbinsäure als Redoxkatalysatorsystem verwendet werden.

Die polymeren Schutzkolloide und/oder Emulgatoren b) können vor oder während der Polymerisation zugegeben werden. Eine zusätzliche Nachgabe von polymeren Stabilisatoren und/oder von Emulgatoren ist ebenfalls möglich. Zu dieser Dispersion werden dann gegebenenfalls noch für den gewünschten Anwendungszweck vorgesehene Additive zugegeben.

Die Formulierung der der erfindungsgemäßen Zusammensetzungen kann in den dafür dem Fachmann bekannten Vorrichtungen erfolgen, beispielsweise in Rührkesseln bzw. geeigneten Mixern. Ein Vermischen der Komponenten erst kurz vor der Applikation z. B. durch geeignete Vorrichtungen ist möglich.

Nach dem Verfilmen des Polymers härtet die erfindungsgemäße Zusammensetzung aus und bildet das erfindungsgemäß gehärtete Produkt. Die Härtungsgeschwindigkeit kann durch geeignete Auswahl der Formulierung beeinflußt werden.

Die erfindungsgemäßen härtbaren Zusammensetzungen lassen sich zu Verfilmungen mit sehr hoher Blockfestigkeit verarbeiten. Ohne auf eine Theorie festgelegt zu werden wird angenommen, dass die strukturelle Besonderheit der hydrophoben Polyaldehyde die Blockfestigkeit positiv beeinflußt.

Die erfindungsgemäßen wässrigen Polymerdispersionen können als Bindemittel für Beschichtungsmittel aller Art eingesetzt werden.

Der Anteil an Polymerdispersion im erfindungsgemäßen Beschichtungsmittel beträgt typischerweise 5 bis 50 Gew.-%, vorzugsweise 10 bis 50 Gew.-%, besonders bevorzugt 15 bis 30 Gew. %. bezogen auf den Gesamtfeststoffgehalt.

Die erfindungsgemäßen Polymerdispersionen werden beispielsweise als Bindemittel in Zubereitungen eingesetzt, die zur Beschichtung von Substraten dienen. Hierunter fallen beispielsweise kunstharzgebundene Putze, Fliesenkleber, Dichtmassen und Versiegelungsmassen, vorzugsweise für poröse Bauteile, sowie Papierstreichmassen insbesondere jedoch Anstrichmittel, wie z.B. Dispersionsfarben, Dispersionslacke und Lasuren.

Besonders bevorzugt werden die erfindungsgemäßen Polymerdispersionen als Dachbeschichtungen, als Fassadenfarben oder als Innenfarben eingesetzt.

Die Polymerdispersionen können direkt oder nach Zusatz rheologie-modifizierender Additive und/oder weiterer Komponenten als Zubereitungen zur Beschichtung von Substraten eingesetzt werden. Solche Zubereitungen sind beispielsweise Grundierungen oder Klarlacke.

Eine bevorzugte Ausführungsform der Zubereitungen sind Dispersionsfarben. Diese enthalten im allgemeinen 30 bis 75 Gew.-%, vorzugsweise 40 bis 65 Gew.%, nichtflüchtige Bestandteile. Hierunter sind alle Bestandteile der Dispersionsfarbe außer Wasser und gegebenenfalls anwesende Kohlenwasserstoffe zu verstehen, beispielsweise die Gesamtmenge an festem Bindemittel, Füllstoff, Pigment, Weichmacher, Bindemittel (Feststoffanteil) und polymerem Hilfsmittel.

Von den nichtflüchtigen Bestandteile entfallen dabei vorzugsweise
a) 3 bis 90 Gew.-%, besonders bevorzugt 10 bis 60 Gew.%, auf die Polymerdispersion, wobei die Mengenangaben auf den Feststoff bezogen sind
b) 5 bis 85 Gew.%, besonders bevorzugt 10 bis 60 Gew.%, auf mindestens ein anorganisches Pigment,
c) 0 bis 85 Gew.%, besonders bevorzugt 20 bis 70 Gew.%, auf anorganische Füllstoffe und
d) 0,1 bis 40 Gew.%, besonders bevorzugt 0,5 bis 15 Gew.%, auf übliche Hilfsmittel.

Besonders bevorzugt sind lösemittel- und weichmacherfreie, wässrige Beschichtungsmittel.

Die Pigment-Volumen-Konzentration (PVK) von erfindungsgemäßen pigmenthaltigen Beschichtungsmitteln liegt im allgemeinen oberhalb von 5 %, vorzugsweise im Bereich von 10 bis 90 %.

Alle dem Fachmann für die genannten Einsatzzwecke bekannten Pigmente können verwendet werden. Bevorzugt sind Titandioxid, vorzugsweise in der Rutilform, Bariumsulfat, Zinkoxid, Zinksulfid, basisches Bleicarbonat, Antimontrioxid und Lithopone (Zinksulfid und Bariumsulfat). Die Beschichtungsmittel können jedoch auch farbige Pigmente, beispielsweise Eisenoxide, Ruß, Graphit, lumineszente Pigmente, Zinkgelb, Zinkgrün, Ultramarin, Manganschwarz, Antimonschwarz, Manganviolett, Pariser Blau oder Schweinfurter Grün enthalten. Neben den anorganischen Pigmenten können die erfindungsgemäßen Beschichtungsmittel auch organische Farbpigmente, beispielsweise Sepia, Gummigutt, Kasseter Braun, Toluidinrot, Pararot, Hansagelb, Indigo, Azofarbstoffe, Anthrachinoide und Indigoide Farbstoffe sowie Dioxazin, Chinacridon-, Phthalocyanin-, Isolndolinon- und Metallkomplexpigmente enthalten.

Als Füllstoffe können alle dem Fachmann für den genannten Einsatzzweck bekannten Füllstoffe verwendet werden. Bevorzugte Füllstoffe sind Alumosilicate, wie z.B. Feldspate, Silicate, wie z.B. Kaolin, Talkum, Glimmer, China Clay, Magnesit, Erdalkalicarbonate, wie z.B. Calciumcarbonat, beispielsweise in Form von Calcit oder Kreide, Magnesiumcarbonat, Dolomit, Erdalkalisulfate, wie z.B. Calciumsulfat, und Siliciumdioxid. Die Füllstoffe können entweder als Einzelkomponenten oder als Füllstoffmischungen eingesetzt werden. In der Praxis bevorzugt sind Füllstoffmischungen wie z.B. Calciumcarbonat/Kaolin und Calciumcarbonat/Talkum. Kunstharzgebundene Putze können auch gröbere Zuschläge, wie Sände oder Sandsteingranulate, enthalten. In Dispersionsfarben werden im allgemeinen feinteilige Füllstoffe bevorzugt.

Zur Erhöhung der Deckkraft und zur Einsparung von Weißpigmenten werden in Dispersionsfarben häufig vorzugsweise feinteilige Füllstoffe, wie z.B. gefälltes Calciumcarbonat oder Mischungen verschiedener Calciumcarbonate mit unterschiedlichen Teilchengrößen eingesetzt. Zur Einstellung der Deckkraft des Farbtons und der Farbtiefe werden vorzugsweise Abmischungen aus Farbpigmenten und Füllstoffen eingesetzt.

Zu den üblichen Hilfsmitteln zählen Netz- oder Dispergiermittel, wie Natrium-, Kalium- oder Ammoniumpolyphosphate, Alkalimetall- und Ammoniumsalze von Polyacrylsäuren und von Polymaleinsäure, Polyphosphonate, wie 1-Hydroxyethan 1,1-diphosphonsaures Natrium sowie Naphthalinsulfonsäuresalze, insbesondere deren Natriumsalze. Als Netzmittel können darüber hinaus geeignete Amino-alkohole, wie z.B. 2-Amino-2-methylpropanol, verwendet werden. Die Dispergiermittel bzw. Netzmittel werden vorzugsweise in einer Menge von 0,1 bis 2 Gew.-%, bezogen auf das Gesamtgewicht des Beschichtungsmittels, eingesetzt.

Ferner können die Hilfsmittel auch Verdickungsmittel umfassen, beispielsweise Cellulosederivate, wie Methylcellulose, Hydroxyethylcellulose und Carboxymethylcellulose, ferner Casein, Gummiarabikum, Tragantgummi, Stärke, Natriumalginat, Polyvinylalkohol, Polyvinylpyrrolidon, Natriumpolyacrylate, wasserlösliche Copolymerisate auf Acryl- und (Meth)acrylsäurebasis, wie Acrylsäure/Acrylamid- und (Meth)acrylsäure/Acrylester-Copolymerisate und sog. Assoziatiwerdicker, wie Styrol-Maleinsäureanhydrid-Polymerisate oder vorzugsweise dem Fachmann bekannte hydrophob modifizierte Polyetherurethane, (HEUR), hydrophob modifizierte Acrylsäure-Copolymere (HASE) Polyetherpolyole.

Auch anorganische Verdickungsmittel, wie z.B. Bentonite oder Hectorit, können verwendet werden.

Bei Anwesenheit von Verdickungsmitteln werden diese vorzugsweise in Mengen von 0,1 bis 3 Gew.%, besonders bevorzugt 0,1 bis 1 Gew.-%, bezogen auf das Gesamtgewicht des Beschichtungsmittels, verwendet.

Auch können die erfindungsgemäßen Beschichtungsmittel weitere vernetzende Zusätze enthalten. Derartige Zusätze können sein: aromatische Ketone, wie z.B. Alkylphenylketone, die gegebenenfalls am Phenylring einen oder mehrere Substituenten aufweisen, oder Benzophenon und substituierte Benzophenone als Photoinitiatoren. Für diesen Zweck geeignete Photoinitiatoren werden z.B. in der DE-A-38 27 975 und der EP-A-0 417 568 offenbart. Geeignete, vernetzend wirkende Verbindungen sind auch wasserlösliche Verbindungen mit mindestens zwei Aminogruppen, beispielsweise Dihydrazide aliphatischer Dicarbonsäuren, wie sie z.B. in der DE-A-39 01 073 offenbart werden.

Darüber hinaus können in den erfindungsgemäßen Beschichtungsmitteln als weitere Hilfsmittel auch Wachse auf Basis von Paraffinen und Polyethylen, sowie Mattierungsmittel, Entschäumer, Konservierungs- oder Hydrophobiermittel, UV-Schutzmittel, Biozide, Fasern, Weichmacher sowie weitere dem Fachmann bekannte Additive eingesetzt werden. Beispiele für Weichmacher sind Dimethylphthalat, Diisobutylphthalat, Adipinsäurediisobutylester, Coasol B^{®} und Plastilit 3060^{®}. Beispiele für Entschäumer sind Mineralöl- oder Silikonentschäumer. Beispiele für; UV-Schutzmittel sind sterisch gehinderte Piperidinverbindungen (HALS) oder Benzophenoderivate.

Mit den erfindungsgemäßen Polymerdispersionen können neben lösungsmittel- und weichmacherfreien Beschichtungsmitteln selbstverständlich auch Beschichtungsmittel hergestellt werden, die Lösungsmittel und/oder Weichmacher enthalten. Solche Filmbildehilfsmittel sind dem Fachmann allgemein bekannt und können üblicherweise in Mengen von 0,1 bis 20 Gew.%, bezogen auf das in der Zubereitung enthaltene Polymer, eingesetzt werden, so dass die Zubereitung eine Mindestfilmbildetemperatur von weniger als 15°C, vorzugsweise im Bereich von 0 bis 10°C, aufweist. Beispiele dafür sind Testbenzin, Texanol^{®}, TxiB^{®}, Butylglykol, Butyldiglykol, Butyldipropylenglykol und Butyltripropylenglykol.

Die erfindungsgemäßen Beschichtungsmittel sind stabile fluide Systeme, die man zur Beschichtung von einer Vielzahl von Substraten verwenden kann. Geeignete Substrate sind beispielsweise Holz, Beton, Metall, Glas, Keramiken, Plastik, Putze, Tapeten, Papier, gestrichene, grundierte oder verwitterte Untergründe. Das Aufbringen des Beschichtungsmittels auf das zu beschichtende Substrat erfolgt in einem von der Ausgestaltung des Beschichtungsmittels abhängigen Weise. Das Aufbringen kann, abhängig von der Viskosität und dem Pigmentgehalt der Zubereitung sowie dem Substrat mittels Rollen, Bürsten, Rakeln oder als Spray erfolgen.

Die erfindungsgemäße Polymerdispersion kann auch zur Herstellung von redispergierbaren Dispersionspulvern eingesetzt werden. Diese können in an sich bekannter Weise durch Versprühen der Polymerdispersion erzeugt werden.

Die aus den erfindungsgemäßen Beschichtungsmitteln erzeugten Filme zeigen überraschenderweise eine außerordentlich hohe Blockfestigkeit, sowie hohe Zugfestigkeiten und geringere Reißdehnungen.

Die oben beschriebenen Verwendungen sind ebenfalls Gegenstand der vorliegenden Erfindung.

Die nachfolgenden Beispiele dienen der Erläuterung der Erfindung. Die in den Beispielen angegebenen Teile und Prozente beziehen sich auf das Gewicht, soweit nicht anders vermerkt.

### Basisdispersion A1

Verwendet wurde Mowilith^{®} DM 777, Handelsware der Celanese Emulsions GmbH, eine durch einstufige Emulsionspolymerisation hergestellte wässerige Polyacrylatdispersion, welche eine geringe Menge von Allylacetoxyacetat abgeleiteten Struktureinheiten enthielt. Der pH-Wert liegt bei 8,5.

Der Feststoffgehalt der Dispersion beträgt 46 Gew. %; die Viskosität, ermittelt nach Brookfield, RVT 2/20 beträgt 200 ± 100 mPa*s.

### Basisdispersion A2

Verwendet wurde Mowilith^{®} LDM 7411, Handelsware der Celanese Emulsions GmbH, eine durch zweistufige Emulsionspolymerisation hergestellte wässerige Polyacrylatdispersion, welche eine geringe Menge von Acetoacetoxyethylenmethacrylat abgeleiteten Struktureinheiten enthielt. Der pH-Wert liegt bei 8,5.

Der Feststoffgehalt der Dispersion 50 Gew. %; die Viskosität, ermittelt nach Brookfield, RVT 3/20 beträgt 2000 mPa*s.

### Beispiele 1 bis 2 und Vergleichsbeispiele V1 bis V4

### Beispiel 1

Basisdispersion A1 wurde mit 0,84 g TCD-Dialdehyd vermischt. Es wurde eine lagerstabile Dispersion erhalten deren pH-Wert 8,02 betrug. Die Mengenangabe des TCD-Dialdehyds bezieht sich dabei auf 100 g der eingesetzten Formulierung.

### Beispiel 2

Basisdispersion A2 wurde mit 0,73 g TCD-Dialdehyd vermischt. Es wurde eine lagerstabile Dispersion erhalten deren pH-Wert 7,75 betrug. Die Mengenangabe des TCD-Dialdehyds bezieht sich dabei auf 100 g der eingesetzten Formulierung.

### Vergleichsbeispiel V1

Basisdispersion A1 wurde als Formulierung verwendet. Der pH-Wert betrug 8,16.

### Vergleichsbeispiel V2

Basisdispersion A2 wurde als Formulierung verwendet. Der pH Wert betrug 7,15.

### Vergleichsbeispiel V3

Basisdispersion A1 wurde mit 0,63 g Glyoxal 40 vermischt. Es wurde eine braungefärbte Dispersion mit unzureichender Lagerstabilität erhalten deren pH-Wert 7,73 betrug. Die Mengenangabe des Glyoxals bezieht sich dabei auf 100 g der eingesetzten Formulierung.

### Vergleichsbeispiel V4

Basisdispersion A2 wurde mit 0,55 g Glyoxal 40 vermischt. Es wurde eine eine verfärbte Dispersion mit unzureichender Lagerstabilität erhalten deren pH-Wert 7,87 betrug. Die Mengenangabe des Glyoxals bezieht sich dabei auf die Gesamtmenge der Formulierung.

### Mechanische Eigenschaften von Verfilmungen

Aus den Dispersionen der Beispiele 1 und 2 sowie der Vergleichsbeispiele V1 bis V4 wurden Verfilmungen hergestellt, deren Reissdehnungen und Reissfestigkeiten nach DIN 53455 ermittelt wurden. Die Verfilmungen aus der Dispersion des Vergleichsbeispiels V4 erwies sich als zu spröde, so dass unter diesen Bedingungen keine Meßergebnisse erhalten werden konnten. Die Ergebnisse für einige Formulierungen sind in der folgenden Tabelle aufgeführt.

| Beispiel Nr. | Reissdehnung (%) | Reissfestigkeit (N/mm²) |
|---|---|---|
| V1 | 220 | 6,3 |
| V3 | 212 | 6,6 |
| 1 | 28 | 9,2 |

### Blockfestigkeiten von Verfilmungen

Von den Dispersionen der Beispiele 1 und 2 sowie der Vergleichsbeispiele V1 bis V4 wurden Verfilmungen auf Glasträgern hergestellt und deren Blockfestigkeiten bestimmt. Dazu wurden die Dispersionen auf Objektträger mittels einer Rakel aufgetragen und 4 Tage bzw. 7 Tage bei Raumtemperatur getrocknet. Danach wurden je zwei Objektträger mit der beschichteten Oberfläche aufeinander gelegt und in einer Klimakammer bei 50 °C 1 Stunde lang mit einem Gewicht von 2 kg belastet. Anschließend wurde die für die Trennung der beiden Objektträger erforderliche Kraft bestimmt. Je höher diese Kraft war, umso geringer ist die Blockfestigkeit der erhaltenen Filme. Die Ergebnisse sind in der folgenden Tabelle dargestellt.

| Beispiel Nr. | Blockfestigkeit nach 4 Tagen Trocknung (g / 6,75 cm²) | Blockfestigkeit nach 7 Tagen Trocknung (g / 6,75 cm²) |
|---|---|---|
| V1 | 4531 | 4669 |
| V3 | 4347 | >5000 |
| 1 | 2950 | 2297 |
| V2 | 1669 | 1472 |
| V4 | 1476 | 1225 |
| 2 | 934 | 481 |

Aus diesen Werten ist zu erkennen, dass sich die Verfilmungen aus den erfindungsgemäßen Dispersionen durch eine sehr hohe Blockfestigkeit (= niedrige Trennkraft) auszeichnen.

### Blockfestigkeiten von Dispersionsfarben

Die Erfindung wird nachfolgend durch Formulierung und Untersuchung von Dispersionsfarben mit untenstehender Zusammensetzung näher beschrieben:

| Bestandteile | Gewichtsteile |
|---|---|
| Wasser | 13 |
| Propylenglykol | 40 |
| Dispergiermittel | 8,0 |
| Netzmittel AMP 90 | 2,0 |
| Byk^{®} 044 | 2,0 |
| Pigment Titandioxid | 210 |
| Ammoniak, 25 %-ige wässr. Lösung | 3,0 |
| Copolymerisatdispersion¹⁾ | 580 |
| Methoxybutanol | 15,0 |
| Propylenglykol | 10,0 |
| Texanol | 20,0 |
| Südranol 240 | 30,0 |
| Mowilith^{®} VDM 7000 | 20,0 |
| Wasser | 47,0 |
| Summe | 1000,0 |

| | |
|---|---|
| ¹⁾ Die verwendeten Dispersionen sind in der folgenden Tabelle aufgeführt | |

Zunächst wurde eine Pigmentpaste erzeugt. Dazu wurde Wasser in einem Dissolver vorgelegt. Sodann wurden zugegeben: Dispergiermittel, Netzmittel, Byk^{®} 044, Propoylenglykol und Titandioxid. Die Drehzahl des Dissolvers wurde erhöht, bis eine Pigmentpaste entstanden war.

Zur Herstellung der Dispersionsfarbe wurde die Bindemitteldispersion in einem Rührgefäß vorgelegt und unter Rühren wurden folgende Bestandteile nacheinander zugegeben: Ammoniaklösung, Pigmentpaste, Gemisch aus Methoxybutanol, Propylenglykol und Texanol sowie Südranol 240. Nach einigen Minuten Rühren wurden Wasser und Mowilith^{®} VDM 7000 unter Rühren zugegeben und die erhaltene Dispersionsfarbe wurde einige Minuten nachgerührt.

Die erhaltenen Dispersionsfarben wurden auf Glasträgern aufgetragen und deren Blockfestigkeiten bestimmt. Dazu wurden die Dispersionsfarben auf Objektträger mittels einer Rakel aufgetragen und 7 Tage bei Raumtemperatur getrocknet. Danach wurden je zwei Objektträger mit der beschichteten Oberfläche aufeinander gelegt und in einer Klimakammer bei 50 °C 1 Stunde lang mit einem Gewicht von 2 kg belastet. Anschließend wurde die für die Trennung der beiden Objektträger erforderliche Kraft bestimmt. Je höher diese Kraft war, umso geringer ist die Blockfestigkeit der erhaltenen Filme. Die Ergebnisse sind in der folgenden Tabelle dargestellt.

| Dispersionsfarbe mit Bindemittel nach Beispiel Nr. | Blockfestigkeit nach 7 Tagen Trocknung (g) |
|---|---|
| V1 | >5000 |
| V3 | 4370 |
| 1 | 2299 |
| V2 | 341 |
| V4 | 388 |
| 2 | 337 |

Aus diesen Werten ist zu erkennen, dass sich die Verfilmungen aus Dispersionsfarben enthaltend Bindemittel aus den erfindungsgemäßen Dispersionen ebenfalls durch eine sehr hohe Blockfestigkeit (= niedrige Trennkraft) auszeichnen.

### Mechanische Eigenschaften von Lasuren

Die Erfindung wird nachfolgend durch Formulierung und Untersuchung von Lasuren mit untenstehender Zusammensetzung näher beschrieben:

| Bestandteile | Gewichtsteile |
|---|---|
| Wasser | 33,5 |
| Copolymerisatdispersion (50%ig) ¹⁾ | 370,0 |
| Ammoniak; 25 % ige wässrige Lösung | 0,5 |
| Wasser | 34,8 |
| Konservierungsmittel | 1,0 |
| Dispergiermittel Lopon 890 | 1,5 |
| Entlüfter | 1,5 |
| Ammoniak; 25 %ige wässrige Lösung | 0,5 |
| Pyrogene Kieselsäure | 10,0 |
| Verdicker | 2,5 |
| Wasser | 7,7 |
| Lösungsmittel Dowanol PnB | 15,0 |
| Entlüfter | 1,5 |
| Pigment Lyconyl Gelb | 20 |
| Summe | 500,0 |

| | |
|---|---|
| ¹⁾ Die verwendeten Dispersionen sind in der folgenden Tabelle aufgeführt | |

Die erhaltenen Lasuren mit einer 1000 µm Rakel auf ein mit Teflon^{®} beschichtete Glasplatte aufgezogen. Das Wasser wurde durch Stehenlassen bei Raumtemperatur verdunstet und der gebildete Film abgezogen. Anschließend wurden mechanische Eigenschaften der Verfilmungen nach DIN 53455 bestimmt. Die Ergebnisse sind in der folgenden Tabelle dargestellt.

| Lasur mit Bindemittel nach Beispiel Nr. | Reissdehnung (%) | Zugfestigkeit (N/mm²) |
|---|---|---|
| V1 | 154 | 11,3 |
| V3 | 125 | 11,8 |
| 1 | 21 | 12,1 |
| V2 | 38 | 8,9 |
| V4 | 24 | 11 |
| 2 | 4 | 11,8 |

Aus diesen Werten ist zu erkennen, dass sich die Verfilmungen aus Lasuren enthaltend Bindemittel aus den erfindungsgemäßen Dispersionen durch geringe Reißdehnungen und sehr hohe Zugfestigkeiten auszeichnen.

## Patentansprüche

1. Wässrige Polymerdispersion mit einem pH Wert von größer als 7 enthaltend a) mindestens ein filmbildendes Polymer abgeleitet von mindestens zwei unterschiedlichen radikalisch polymerisierbaren ethylenisch ungesättigten Monomeren, von denen das erste Monomer ausgewählt wird aus der Gruppe der Mono- oder Diester von α, β-ethylenisch ungesättigten Mono- oder Dicarbonsäuren mit Alkanolen, der Vinylester oder der Vinylaromaten und das zweite Monomer eine α, β-ethylenisch ungesättigte Verbindung ist, die eine im alkalischen Milieu mit Aldehyden reaktive Gruppe aufweist, und enthaltend b) mindestens ein Stabilisierungsmittel, sowie c) mindestens einen cycloaliphatischen Kohlenwasserstoff mit zwei bis sechs Aldehydgruppen.

2. Polymerdispersion nach Anspruch 1, **dadurch gekennzeichnet, dass** das erste Monomer ausgewählt wird aus der Gruppe der Ester der Acrylsäure mit C₁-C₈-Alkanolen, der Ester der Methacrylsäure mit C₁-C₈-Alkanolen, der Vinylaromaten, der Vinylester von gesättigten C₁-C₄-Carbonsäuren oder Kombinationen von zwei oder mehreren dieser Monomeren und dass das zweite Monomer ausgewählt wird aus der Gruppe der ethlyenisch ungesättigten Monomeren enthaltend eine Acetoacetonatgruppe oder solchen enthaltend einen Imidazolinonrest oder einen Harnstoffrest.

3. Polymerdispersion nach Anspruch 1, **dadurch gekennzeichnet, dass** das filmbildende Polymer ausgewählt wird aus der Gruppe der Copolymeren abgeleitet von ein oder mehreren Vinylestern und dem zweiten Monomer, der Copolymeren von Vinylestern mit Estern α, β-ethylenisch ungesättigter C₃-C₈-Mono-oder Dicarbonsäuren mit C₁-C₈-Alkanolen mit dem zweiten Monomer, der Copolymeren von Vinylestern mit Olefinen und dem zweiten Monomer, der Copolymeren von Vinylestern, Ethen, Estern α, β-ethylenisch ungesättigten C₃-C₈-Mono- oder Dicarbonsäuren mit C₁-C₈-Alkanolen und dem zweiten Monomer, der Copolymeren von Estern der Acrylsäure und/oder der Methacrylsäure mit dem zweiten Monomer, der Copolymeren des Styrols mit Butadien und mit dem zweiten Monomer, der Copolymeren des Styrols mit Estern α,β-ethylenisch ungesättigter C₃-C₈-Mono- oder Dicarbonsäuren mit C₁-C₈-Alkanolen und mit dem zweiten Monomer.

4. Polymerdispersion nach Anspruch 3, **dadurch gekennzeichnet, dass** das Copolymer ausgewählt wird aus der Gruppe der von Vinylacetat abgeleiteten Copolymeren mit dem zweiten Monomer, der Copolymeren von Vinylestern mit Estern der Acrylsäure und/oder der Methacrylsäure und/oder der Fumarsäure und/oder der Maleinsäure mit C₁-C₈-Alkanolen und dem zweiten Monomer, der Copolymeren von Vinylacetat mit Ethylen und dem zweiten Monomer, der Copolymeren von Vinylestern, Ethylen und Estern der Acrylsäure und/oder der Methacrylsäure und/oder der Fumarsäure und/oder der Maleinsäure mit C₁-C₈-Alkanolen sowie dem zweiten Monomer, der Copolymeren von Estern der Acrylsäure und/oder der Methacrylsäure mit dem zweiten Monomer, der Copolymeren des Styrols mit Butadien und dem zweiten Monomer sowie den Copolymeren des Styrols mit Estern der Acrylsäure und/oder der Methacrylsäure mit C₁-C₈-Alkanolen und dem zweiten Monomer.

5. Polymerdispersion nach einem der Ansprüche 1 bis 4, **dadurch gekennzeichnet, dass** das filmbildende Polymer ein Vinylester-Copolymer ist, das sich ableitet von Vinylacetat, einem Vinylester von gesättigten verzweigten Monocarbonsäuren mit 5 bis 15 Kohlenstoffatomen im Säurerest, dem zweiten Monomer und gegebenenfalls Ethylen, wobei der Anteil der Vinylestereinheiten im Copolymer mindestens 50 Gew.-% beträgt.

6. Polymerdispersion nach einem der Ansprüche 1 bis 5, **dadurch gekennzeichnet, dass** das filmbildende Polymer ein Acrylsäureester- oder Methacrylsäureester-Copolymer ist, das sich ableitet von Acrylsäureester und/oder Methacrylsäureester dem zweiten Monomer und gegebenenfalls Styrol, wobei der Anteil der Acrylsäureester- und der Methacrylsäureester-einheiten im Copolymer mindestens 50 Gew.-% beträgt.

7. Polymerdispersion nach einem der Ansprüche 1 bis 6, **dadurch gekennzeichnet, dass** das zweite Monomer ausgewählt wird aus der Gruppe der ethlyenisch ungesättigten Monomeren enthaltend eine 1,3-Diketogruppe oder der ethylenisch ungesättigten Monomeren enthaltend einen Imidazolinonrest oder der ethylenisch ungesättigten Monomeren enthaltend einen Harnstoffrest.

8. Polymerdispersion nach Anspruch 7, **dadurch gekennzeichnet, dass** das zweite Monomer ausgewählt wird aus der Gruppe der Verbindungen der Formeln (Ia) (Ib), (Ic) und (Id) 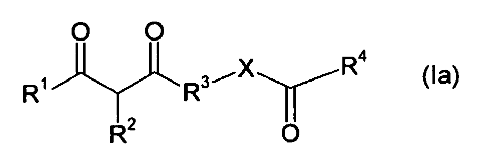 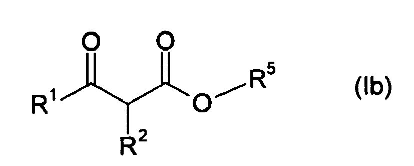 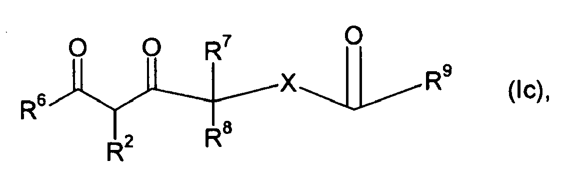 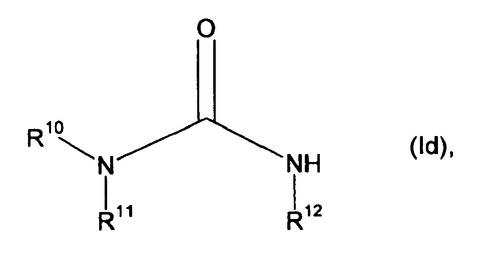
worin R¹ ein C₁-C₅-Alkylrest ist,
R² ein C₁-C₅-Alkylrest oder Wasserstoff ist,
R³ ein C₁-C₅-Alkylenrest bedeutet, und
R⁴ der Rest einer ethylenisch ungesättigten organischen Carbonsäure nach dem Entfernen der Carboxylgruppe ist,
X Sauerstoff oder NR¹³ bedeutet, mit R¹³ Wasserstoff oder C₁-C₅-Alkyl,
R⁵ Vinyl oder Allyl bedeutet,
R⁶ ein C₁-C₅-Alkylrest,
R⁷ und R⁸ unabhängig voneinander Wasserstoff oder einen C₁-C₅-Alkylrest bedeuten,
R⁹ ein Rest einer ethylenisch ungesättigten organische Carbonsäure nach dem Entfernen der Carboxylgruppe ist,
R¹⁰ für einen monoethylenisch ungesättigten Rest mit 2-20 C-Atomen steht, und R¹¹ und R¹² unabhängig voneinander Wasserstoff, C₁-C₅-Alkyl bedeuten oder gemeinsam eine C₂-C₄-Alkylengruppe bilden, die gegebenenfalls ein- oder zweifach mit C₁-C₅-Alkyl, C₁-C₄-Alkoxy und/oder Hydroxy substituiert ist.

9. Polymerdispersion nach Anspruch 8, **dadurch gekennzeichnet, dass** das zweite Monomer ausgewählt wird aus der Gruppe Allylacetoacetat, Vinylacetoacetat, Acetoacetoxyethylacrylat oder Acetoacetoxyethylmethacrylat.

10. Polymerdispersion nach einem der Ansprüche 1 bis 9, **dadurch gekennzeichnet, dass** das filmbildende Copolymer Monomereinheiten enthält, die sich ableiten von ethylenisch ungesättigten Monomeren enthaltend hydroxy-funktionelle Gruppen und/oder von ethylenisch ungesättigten Monomeren enthaltend vernetzbare Carbonylgruppen und/oder ethylenisch ungesättigten Monomeren enthaltend Silangruppen und/oder ethylenisch ungesättigten Monomeren enthaltend Epoxidgruppen.

11. Polymerdispersion nach einem der Ansprüche 1 bis 10, **dadurch gekennzeichnet, dass** die Polymerdispersion mindestens ein Schutzkolloid enthält.

12. Polymerdispersion nach einem der Ansprüche 1 bis 10, **dadurch gekennzeichnet, dass** die Polymerdispersion ein Mehrstufen-Polymerisat enthält.

13. Polymerdispersion nach einem der Ansprüche 1 bis 12, **dadurch gekennzeichnet, dass** diese eine Mehrkomponenten-Zusammensetzung mit den Komponenten A) und B) ist, wobei Komponente A) eine wässrige Dispersion mit einem pH-Wert von mehr als 7 ist, welche filmbildende Polymer und das Schutzkolloid und/oder den Emulgator enthält und wobei Komponente B) mindestens einen cycloaliphatischen Kohlenwasserstoff mit zwei bis sechs Aldehydgruppen enthält.

14. Polymerdispersion nach einem der Ansprüche 1 bis 12, **dadurch gekennzeichnet, dass** der cycloaliphatischen Kohlenwasserstoff mit zwei bis sechs Aldehydgruppen ein cycloaliphatischer Dialdehyd der Formeln (II) bis (X) oder ein Gemisch von zwei oder mehreren dieser Verbindungen ist 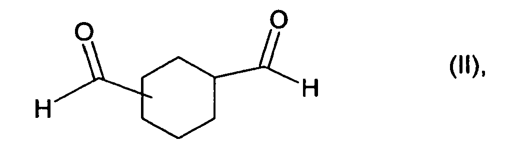 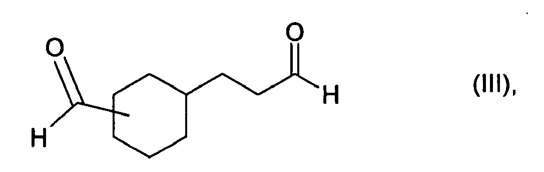 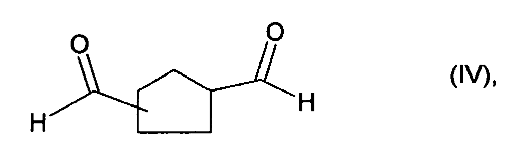 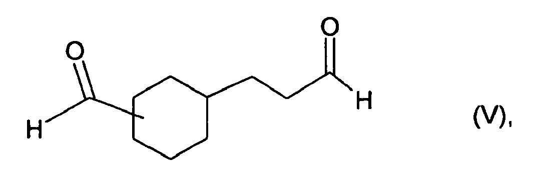 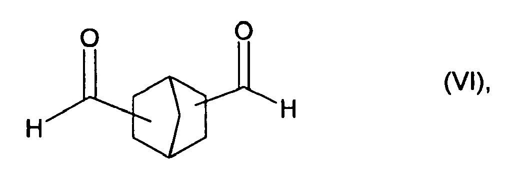 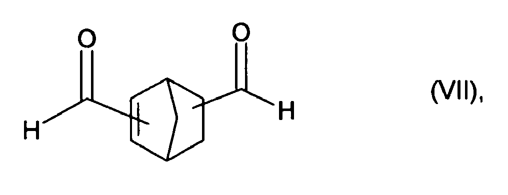 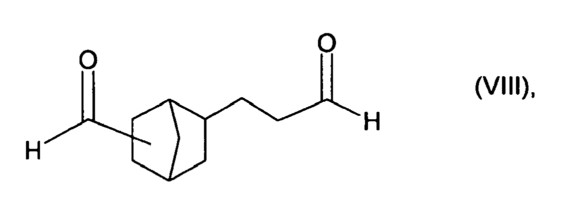 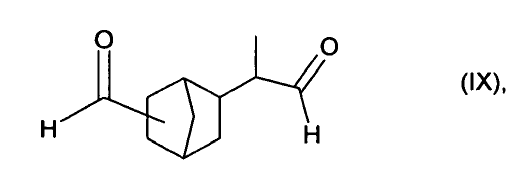 und

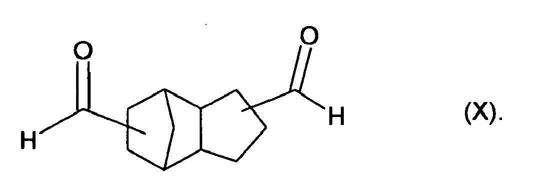

15. Härtbare Zusammensetzung erhältlich durch Verdampfen des Wassers aus der Polymerdispersion nach einem der Ansprüche 1 bis 14.

16. Beschichtungsmittel enthaltend die Polymerdispersion nach einem der Ansprüche 1 bis 14 sowie Pigmente und/oder Füllstoffe.

## Claims

1. An aqueous polymer dispersion having a pH value higher than 7 containing a) at least one film-forming polymer derived from at least two different free-radically polymerizable ethylenically unsaturated monomers whereof the first monomer is selected from the group of mono- or diesters of α,β-ethylenically unsaturated mono- or dicarboxylic acids with alkanols, vinyl esters or vinyl aromatics, and the second monomer is an α,β-ethylenically unsaturated compound having a group reactive with aldehydes in an alkaline medium, and containing b) at least one stabilizer, and c) at least one cycloaliphatic hydrocarbon with two to six aldehyde groups.

2. The polymer dispersion according to claim 1, **characterized in that** said first monomer is selected from the group of esters of acrylic acid with C₁-C₈-alkanols, esters of methacrylic acid with C₁-C₈-alkanols, vinyl aromatics, vinyl esters of saturated C₁-C₄ carboxylic acids or combinations of two or more of these monomers, and that said second monomer is selected from the group of ethylenically unsaturated monomers containing an acetoacetonate group or those containing an imidazolinone group or a urea group.

3. The polymer dispersion according to claim 1, **characterized in that** said film-forming polymer is selected from the group of copolymers derived from one or more vinyl esters and the second monomer, copolymers of vinyl esters with esters of α,β-ethylenically unsaturated C₃-C₈-mono- or -dicarboxylic acids with C₁-C₈-alkanols with the second monomer, copolymers of vinyl esters with olefins and the second monomer, copolymers of vinyl esters, ethene, esters of α,β-ethylenically unsaturated C₃-C₈-mono- or -dicarboxylic acids with C₁-C₈-alkanols and the second monomer, copolymers of esters of acrylic acid and/or methacrylic acid with the second monomer, copolymers of styrene with butadiene and with the second monomer, copolymers of styrene with esters of α,β-ethylenically unsaturated C₃-C₈-mono- or - dicarboxylic acids with C₁-C₈-alkanols and with the second monomer.

4. The polymer dispersion according to claim 3, **characterized in that** said copolymer is selected from the group of copolymers derived from vinyl acetate with the second monomer, copolymers of vinyl esters with esters of acrylic acid and/or methacrylic acid and/or fumaric acid and/or maleic acid with C₁-C₈-alkanols and the second monomer, copolymers of vinyl acetate with ethylene and the second monomer, copolymers of vinyl esters, ethylene and esters of acrylic acid and/or methacrylic acid and/or fumaric acid and/or maleic acid with C₁-C₈-alkanols and the second monomer, copolymers of esters of acrylic acid and/or methacrylic acid with the second monomer, copolymers of styrene with butadiene and the second monomer, and copolymers of styrene with esters of acrylic acid and/or methacrylic acid with C₁-C₈-alkanols and the second monomer.

5. The polymer dispersion according to any of claims 1 to 4, **characterized in that** said film-forming polymer is a vinyl ester copolymer derived from vinyl acetate, a vinyl ester of saturated branched monocarboxylic acids with 5 to 15 carbon atoms in the acid residue, the second monomer and optionally ethylene, the proportion of vinyl ester units in the copolymer being at least 50% by weight.

6. The polymer dispersion according to any of claims 1 to 5, **characterized in that** said film-forming polymer is an acrylic acid ester or methacrylic acid ester copolymer derived from acrylic acid ester and/or methacrylic acid ester, the second monomer and optionally styrene, the proportion of acrylic acid ester and methacrylic acid ester units in the copolymer being at least 50% by weight.

7. The polymer dispersion according to any of claims 1 to 6, **characterized in that** said second monomer is selected from the group of ethylenically unsaturated monomers containing a 1,3-diketo group or the ethylenically unsaturated monomers containing an imidazolinone group or the ethylenically unsaturated monomers containing a urea group.

8. The polymer dispersion according to claim 7, **characterized in that** said second monomer is selected from the group of compounds of formulae (Ia), (Ib), (Ic) and (Id) 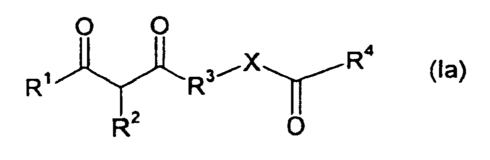 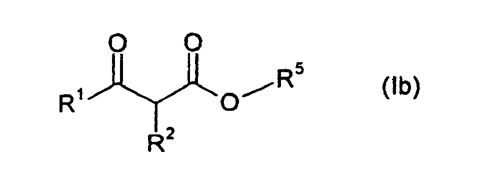 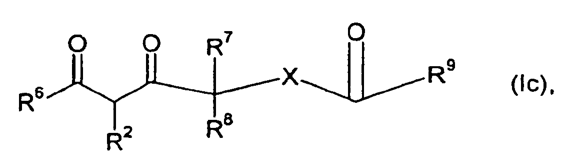 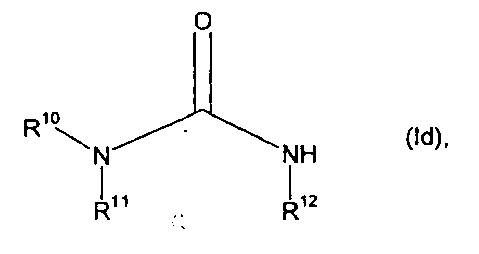
wherein R¹ is a C₁-C₅ alkyl group,
R² is a C₁-C₅ alkyl group or hydrogen,
R³ is a C₁-C₅ alkylene group, and
R⁴ is the residue of an ethylenically unsaturated organic carboxylic acid after the removal of the carboxy group,
X is oxygen or NR¹³, with R¹³ being hydrogen or C₁-C₅ alkyl,
R⁵ is vinyl or allyl,
R⁶ is a C₁-C₅ alkyl residue,
R⁷ and R⁸ are independently hydrogen or a C₁-C₅ alkyl residue,
R⁹ is a residue of an ethylenically unsaturated organic carboxylic acid after the removal of the carboxy group,
R¹⁰ represents a monoethylenically unsaturated residue with 2-20 carbon atoms, and
R¹¹ and R¹² are independently hydrogen, C₁-C₅ alkyl, or together form a C₂-C₄ alkylene group that may optionally be substituted with one or two C₁-C₅ alkyl, C₁-C₄ alkoxy and/or hydroxy substituents.

9. The polymer dispersion according to claim 8, **characterized in that** said second monomer is selected from the group consisting of allyl acetoacetate, vinyl acetoacetate, acetoacetoxyethyl acrylate or acetoacetoxyethyl methacrylate.

10. The polymer dispersion according to any of claims 1 to 9, **characterized in that** said film-forming copolymer contains monomer units derived from ethylenically unsaturated monomers containing hydroxy-functional groups and/or ethylenically unsaturated monomers containing cross-linkable carbonyl groups and/or ethylenically unsaturated monomers containing silane groups and/or ethylenically unsaturated monomers containing epoxide groups.

11. The polymer dispersion according to any of claims 1 to 10, **characterized in that** said polymer dispersion contains at least one protective colloid.

12. The polymer dispersion according to any of claims 1 to 10, **characterized in that** said polymer dispersion contains a multistep polymerizate.

13. The polymer dispersion according to any of claims 1 to 12, **characterized by** being a multicomponent composition with components A) and B), wherein component A) is an aqueous dispersion having a pH value higher than 7 containing the film-forming polymer and the protective colloid and/or the emulsifier, and wherein component B) contains at least one cycloaliphatic hydrocarbon with two to six aldehyde groups.

14. The polymer dispersion according to any of claims 1 to 12, **characterized in that** said cycloaliphatic hydrocarbon with two to six aldehyde groups is a cycloaliphatic dialdehyde of formulae (II) to (X) or a mixture of two or more of such compounds: 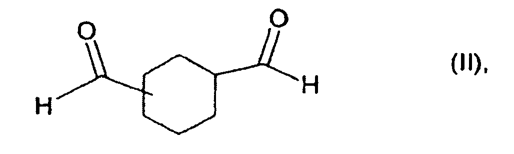 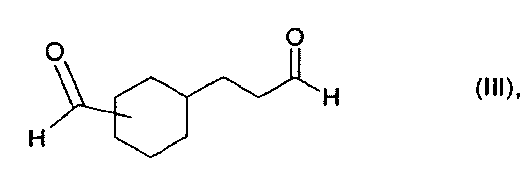 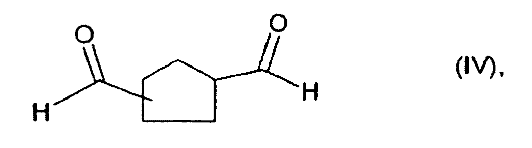 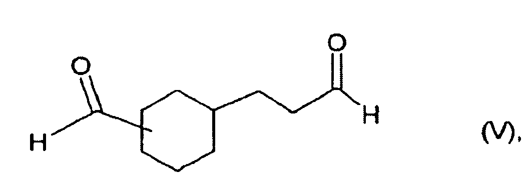 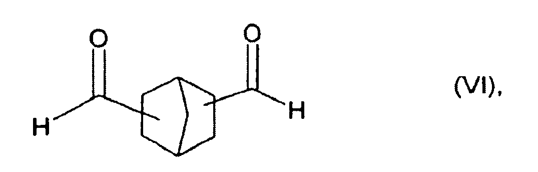 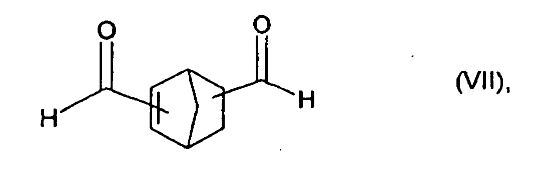 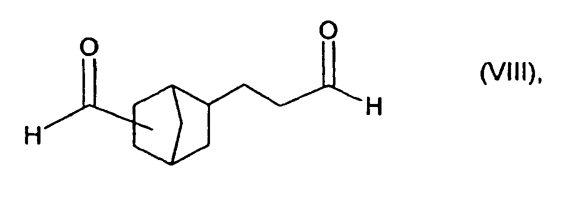 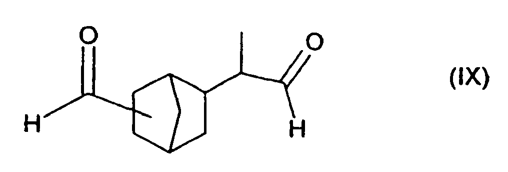 und

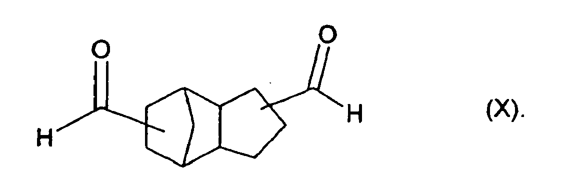

15. A curable composition obtainable by evaporating the water from the polymer dispersion according to any of claims 1 to 14.

16. A coating agent containing the polymer dispersion according to any of claims 1 to 14 as well as pigments and/or fillers.

## Revendications

1. Dispersion de polymère aqueuse avec une valeur pH supérieure à 7 contenant a) au moins un polymère filmogène dérivé d'au moins deux monomères insaturés éthyléniquement, polymérisables à radicaux libres, différents dont le premier monomère est choisi dans le groupe des mono- ou diesters d'acides mono- ou dicarboxyliques insaturés α,β-éthyléniquement avec des alcanols, des esters vinyliques ou des composés aromatiques vinyliques, et le second monomère est un composé insaturé α,β-éthyléniquement ayant un groupe réactif avec les aldéhydes en milieu alcalin, et contenant b) au moins un agent stabilisant, ainsi que c) au moins un hydrocarbure cycloaliphatique avec deux à six groupes aldéhyde.

2. Dispersion de polymère selon la revendication 1, **caractérisée en ce que** le premier monomère est choisi dans le groupe des esters de l'acide acrylique avec des C₁-C₈-alkanols, des esters de l'acide méthacrylique avec des C₁-C₈-alkanols, des composés aromatiques vinyliques, des esters vinyliques d'acides carboxyliques saturés en C₁-C₄ ou des combinaisons de deux ou plusieurs de ces monomères, et que le second monomère est choisi dans le groupe des monomères insaturés éthyléniquement contenant un groupe acétoacétonate ou ceux contenant un groupe imidazolinone ou un groupe urée.

3. Dispersion de polymère selon la revendication 1, **caractérisée en ce que** le polymère filmogène est choisi dans le groupe des copolymères dérivés d'un ou plusieurs esters vinyliques et du second monomère, des copolymères d'esters vinyliques avec des esters d'acides mono- ou dicarboxyliques insaturés α,β-éthyléniquement en C₃-C₈ avec des C₁-C₈-alkanols avec le second monomère, des copolymères d'esters vinyliques avec des oléfines et le second monomère, des copolymères d'esters vinyliques, d'éthène, d'esters d'acides mono- ou dicarboxyliques insaturés α,β-éthyléniquement en C₃-C₈ avec des C₁-C₈-alkanols et le second monomère, des copolymères d'esters de l'acide acrylique et/ou de l'acide méthacrylique avec le second monomère, des copolymères du styrène avec le butadiène et avec le second monomère, des copolymères du styrène avec des esters d'acides mono- ou dicarboxyliques insaturés α,β-éthyléniquement en C₃-C₈ avec des C₁-C₈-alkanols et avec le second monomère.

4. Dispersion de polymère selon la revendication 3, **caractérisée en ce que** le copolymère est choisi dans le groupe des copolymères dérivés de l'acétate de vinyle avec le second monomère, des copolymères d'esters vinyliques avec des esters de l'acide acrylique et/ou de l'acide méthacrylique et/ou de l'acide fumarique et/ou de l'acide maléique avec des C₁-C₈-alkanols et le second monomère, des copolymères de l'acétate de vinyle avec l'éthylène et le second monomère, des copolymères d'esters vinyliques, de l'éthylène et d'esters de l'acide acrylique et/ou de l'acide méthacrylique et/ou de l'acide fumarique et/ou de l'acide maléique avec des C₁-C₈-alkanols ainsi que le second monomère, des copolymères d'esters de l'acide acrylique et/ou de l'acide méthacrylique avec le second monomère, des copolymères du styrène avec le butadiène et le second monomère, et des copolymères du styrène avec des esters de l'acide acrylique et/ou de l'acide méthacrylique avec des C₁-C₈-alkanols et le second monomère.

5. Dispersion de polymère selon l'une quelconque des revendications 1 à 4, **caractérisée en ce que** le polymère filmogène est un copolymère d'un ester vinylique dérivé de l'acétate de vinyle, d'un ester vinylique d'acides mono-carboxyliques ramifiés saturés contenant 5 à 15 atomes de carbone dans le reste d'acide, du second monomère et éventuellement de l'éthylène, la quantité de motifs d'ester vinylique dans le copolymère étant au moins 50 % en poids.

6. Dispersion de polymère selon l'une quelconque des revendications 1 à 5, **caractérisée en ce que** le polymère filmogène est un copolymère d'ester de l'acide acrylique ou d'ester de l'acide méthacrylique dérivé d'un ester acrylique et/ou d'un ester méthacrylique, du second monomère et éventuellement du styrène, la quantité de motifs d'ester acrylique et d'ester méthacrylique dans le copolymère étant au moins 50 % en poids.

7. Dispersion de polymère selon l'une quelconque des revendications 1 à 6, **caractérisée en ce que** le second monomère est choisi dans le groupe des monomères insaturés éthyléniquement contenant un groupe 1,3-dicéto ou des monomères insaturés éthyléniquement contenant un groupe imidazolinone ou des monomères insaturés éthyléniquement contenant un groupe urée.

8. Dispersion de polymère selon la revendication 7, **caractérisée en ce que** le second monomère est choisi dans le groupe des composés répondant aux formules (Ia), (Ib), (Ic) et (Id) : 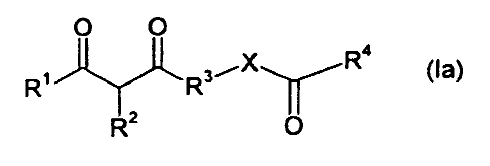 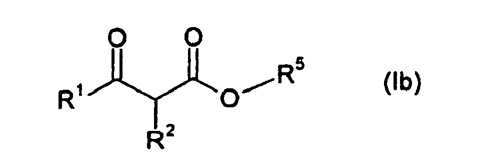 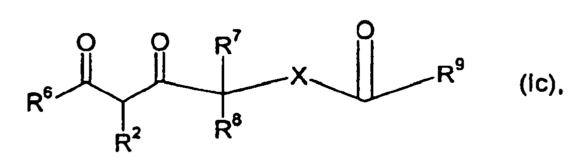 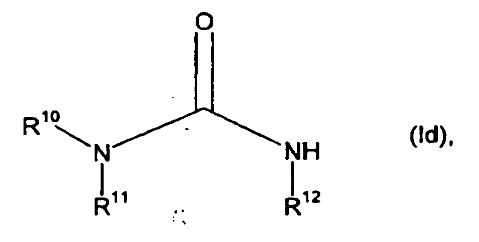
où R¹ est un groupe alkyle en C₁-C₅,
R² est un groupe alkyle en C₁-C₅ ou hydrogène,
R³ représente un groupe alkylène en C₁-C₅, et
R⁴ est le reste d'un acide carboxylique organique insaturé éthyléniquement après l'enlèvement du groupe carboxyle,
X représente oxygène ou NR¹³, R¹³ étant hydrogène ou C₁-C₅-alkyle,
R⁵ représente vinyle ou allyle,
R⁶ représente un groupe alkyle en C₁-C₅,
R⁷ et R⁸ représentent indépendamment hydrogène ou un groupe alkyle en C₁-C₅,
R⁹ est le reste d'un acide carboxylique organique insaturé éthyléniquement après l'enlèvement du groupe carboxyle,
R¹⁰ représente un groupe insaturé monoéthyléniquement avec 2-20 atomes de carbone, et
R¹¹ et R¹² représentent indépendamment hydrogène, C₁-C₅-alkyle, ou ensemble forment un groupe alkylène en C₂-C₄ éventuellement substitué avec un ou deux substituants C₁-C₅-alkyle, C₁-C₄-alcoxy et/ou hydroxy.

9. Dispersion de polymère selon la revendication 8, **caractérisée en ce que** le second monomère est choisi dans le groupe consistant en acétoacétate d'allyle, acétoacétate de vinyle, acrylate d'acétoacétoxyéthyle ou méthacrylate d'acétoacétoxyéthyle.

10. Dispersion de polymère selon l'une quelconque des revendications 1 à 9, **caractérisée en ce que** le copolymère filmogène contient des motifs de monomères dérivés de monomères insaturés éthyléniquement contenant des groupes fonctionnels de type hydroxyle, et/ou de monomères insaturés éthyléniquement contenant des groupes carbonyle réticulables, et/ou de monomères insaturés éthyléniquement contenant des groupes silane, et/ou de monomères insaturés éthyléniquement contenant des groupes époxyde.

11. Dispersion de polymère selon l'une quelconque des revendications 1 à 10, **caractérisée en ce que** la dispersion de polymère contient au moins un colloïde protecteur.

12. Dispersion de polymère selon l'une quelconque des revendications 1 à 10, **caractérisée en ce que** la dispersion de polymère contient un polymérisat à plusieurs étapes.

13. Dispersion de polymère selon l'une quelconque des revendications 1 à 12, **caractérisée en ce qu'**elle est une composition à plusieurs composants avec les composants A) et B), dans laquelle le composant A) est une dispersion aqueuse avec une valeur pH supérieure à 7 contenant un polymère filmogène et le colloïde protecteur et/ou l'émulsifiant et dans laquelle le composant B) contient au moins un hydrocarbure cycloaliphatique avec deux à six groupes aldéhyde.

14. Dispersion de polymère selon l'une quelconque des revendications 1 à 12, **caractérisée en ce que** l'hydrocarbure cycloaliphatique avec deux à six groupes aldéhyde est un dialdéhyde cycloaliphatique répondant aux formules (II) à (X) ou un mélange de deux ou plusieurs de ces composés : 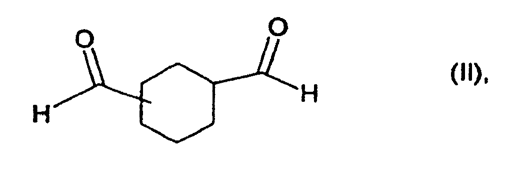 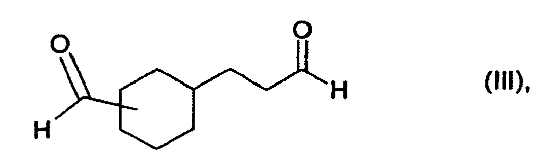 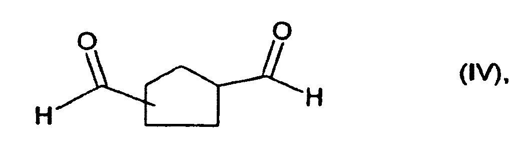 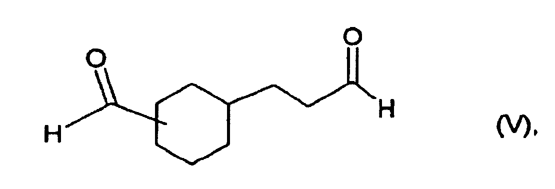 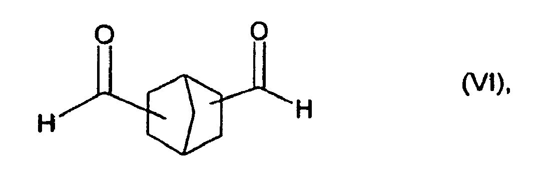 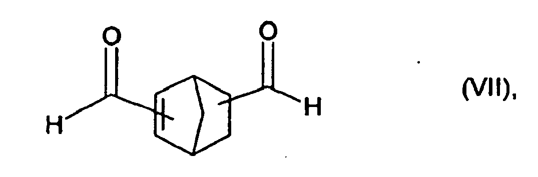 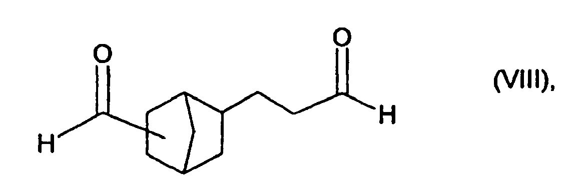 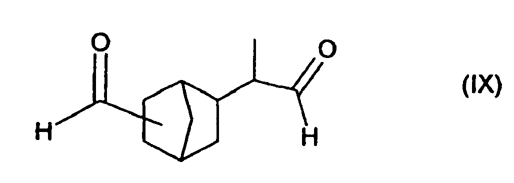 et

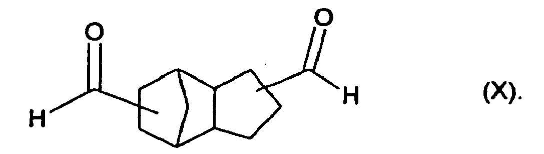

15. Composition durcissable pouvant être obtenue par l'évaporation de l'eau à partir de la dispersion de polymère selon l'une quelconque des revendications 1 à 14.

16. Agent de revêtement contentant la dispersion de polymère selon l'une quelconque des revendications 1 à 14 ainsi que des pigments et/ou des charges.
